# EUROPÄISCHE PATENTSCHRIFT

(11) **EP 2 673 182 B1**
(45) Veröffentlichungstag und Bekanntmachung des Hinweises auf die Patenterteilung: **11.01.2017**
(21) Anmeldenummer: 12706215.6
(22) Anmeldetag: 07.02.2012
(51) Int. Cl.: B62H 3/02, B62M 6/45

(54) **MODULARES FAHRZEUGSYSTEM, ELEKTROFAHRZEUG UND MODUL ZUR VERBINDUNG MIT EINEM ELEKTROFAHRZEUG**
MODULAR VEHICLE SYSTEM, ELECTRIC VEHICLE AND MODULE FOR CONNECTING TO AN ELECTRIC VEHICLE
SYSTÈME DE VÉHICULE MODULAIRE, VÉHICULE ÉLECTRIQUE ET MODULE À RELIER À UN VÉHICULE ÉLECTRIQUE

(30) Priorität: 07.02.2011 DE 102011003724
(43) Veröffentlichungstag der Anmeldung: 18.12.2013
(73) Patentinhaber: Energybus E.V., 07922 Tanna (DE)
(72) Erfinder: NEUPERT, Hannes, 07922 Tanna (DE)
(74) Vertreter: Dienwiebel, Thomas
(86) Internationale Anmeldenummer: PCT/EP2012/052055
(87) Internationale Veröffentlichungsnummer: WO 2012/107448

(56) Entgegenhaltungen:
- EP-A2- 2 261 108
- WO-A2-2008/157443
- GB-A- 2 455 551
- KR-B1- 100 968 943
- US-A1- 2007 220 933

## Beschreibung

Die Erfindung betrifft ein modulares Fahrzeugsystem, ein Elektrofahrzeug und ein Modul zur Verbindung mit einem Elektrofahrzeug.

Elektrisch angetriebene Fahrzeuge gewinnen seit geraumer Zeit insbesondere für den Personennahverkehr angesichts steigender Energiekosten und der Forderung nach verringerten Emissionen des Verkehrs zunehmend an Bedeutung. Insbesondere im Bereich der Elektroleichtfahrzeuge, in welchen bspw. Elektrofahrräder, Pedelecs und Roller, aber auch Rollstühle und Quads fallen, sind mittlerweile zahlreiche Fahrzeugtypen kommerziell erhältlich.

Sämtliche derartige Fahrzeuge weisen einen Elektromotor auf, der zum alleinigen oder unterstützenden Antrieb eingesetzt und über eine oder mehrere Batterien mit elektrischer Energie versorgt wird. Es ist daher notwendig, das elektrische System von Elektrofahrzeugen so auszulegen, dass eine sichere und störungsfreie Leistungsversorgung des Elektromotors gegeben ist.

Insbesondere ein unbeabsichtigtes Trennen oder Verbinden von einzelnen Komponenten, wie bspw. eines Ladegerätes oder einer Batterie, können Störungen oder im ungünstigsten Fall auch Beschädigungen am elektrischen System des Elektrofahrzeugs verursachen.

WO 2008/157443 A2 betrifft ein sogenanntes "shared vehicle management system", somit ein System zur Verwaltung von "geteilten" Fahrzeugen, ähnlich einem "Carsharing"-System. Die Schrift offenbart unter anderem eine Verleihstation für Elektrofahrzeuge, um ein solches Fahrzeug aufzuladen und während des Ladevorganges sicher aufzubewahren. Figur 1 der Druckschrift zeigt eine solche Verleihstation. Die Figuren 19-29 zeigen ein entsprechendes Verbindungssystem für Fahrzeug und Verleihstation.

Zur Verbindung von Fahrzeug und Verleihstation bringt der Fahrzeugnutzer das Fahrzeug und somit Verbinder in die Nähe der Aufnahme. Messerkontakte im Verbinder stellen sodann eine elektrische Verbindung mit einem elektrischen Steckverbinder in der Aufnahme her, um die Batterien des Fahrzeugs aufzuladen. Die Anordnung aus Verbinder und Aufnahme sorgt ferner dafür, dass das Fahrzeug sicher aufrecht gehalten wird. Die Verwendung einer Seitenstütze ist nicht erforderlich.

US 2007/220933 A1 offenbart ein automatisches Abstellsystem für Fahrräder. Das System weist ein interaktives Terminal sowie eine Mehrzahl mit diesem verbundene Sicherungsstationen auf. Jede Sicherungsstation weist eine Aufnahme mit einer zulaufenden Öffnung auf, die zur Aufnahme eines Sicherungsteils ausgebildet ist.

Das Sicherungsteil weist Kontaktzonen sowie einen durchgehenden Schlitz auf. Entsprechend der Ausbildung der Aufnahme weist das Sicherungsteil elektrische Kontakte sowie einen Mitnehmer auf.

Zur Benutzung eines Fahrrades des Abstellsystems kann sich ein Benutzer am Terminal, bspw. mit einer elektronischen Karte, anmelden. Nach erfolgter Autorisation entriegelt das Terminal den Mitnehmer aus dem durchgehenden Schlitz am Fahrrad, welches entsprechend von der Sicherungsstation getrennt werden kann. Das Terminal erkennt elektrisch über die Kontakte, dass das Fahrrad entnommen wurde.

KR 100 968 943 B1 offenbart eine Fahrrad-Station mit einem Dach mit einem photovoltaischen Modul. Das photovoltaische Modul dient zum Laden einer Batterie im Fahrzeug über einen Ladeteil und zum automatischen Überwachen der Batterie.

GB 2 455 551 A, die als nächstliegender Stand der technik angesehen wird, offenbart ein Kopplungs- und Aufladesystem für elektrische Fahrzeuge mit einer Kopplungsstation und einem elektrischen Fahrzeug, wie einem Fahrrad. Die Kopplungsstation besteht aus einer T-förmigen Säule mit konkaven Vertiefungen. Die Vertiefungen dienen zur Aufnahme eines Teils des Fahrradrahmens. Jede der Vertiefungen weist zwei elektrische Kontakte sowie einen Riegel auf. Die Kopplungsstation erlaubt so ein gleichzeitiges Aufladen und Sichern eines Fahrzeugs.

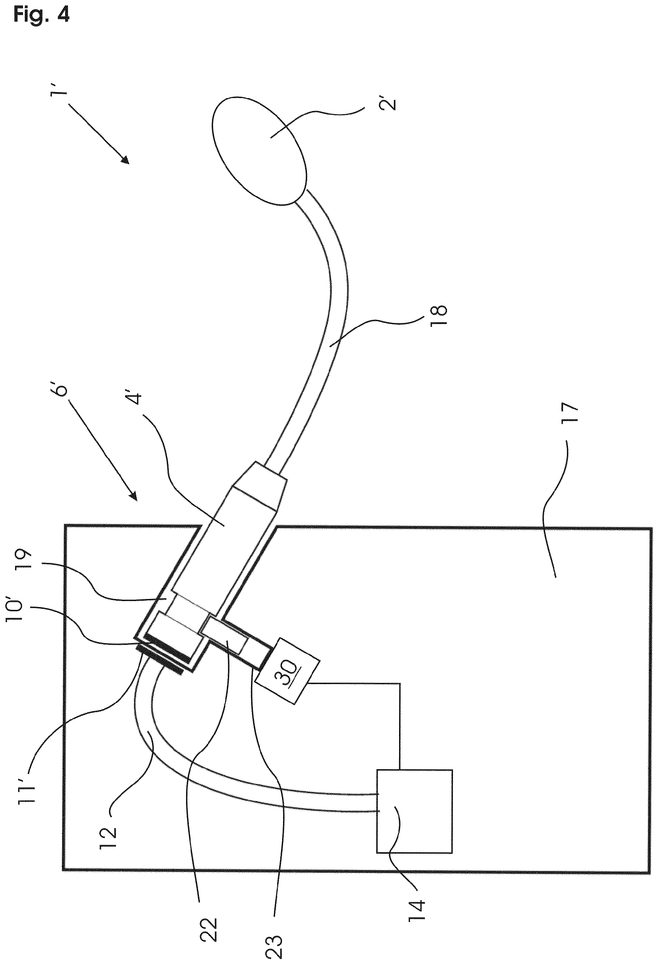

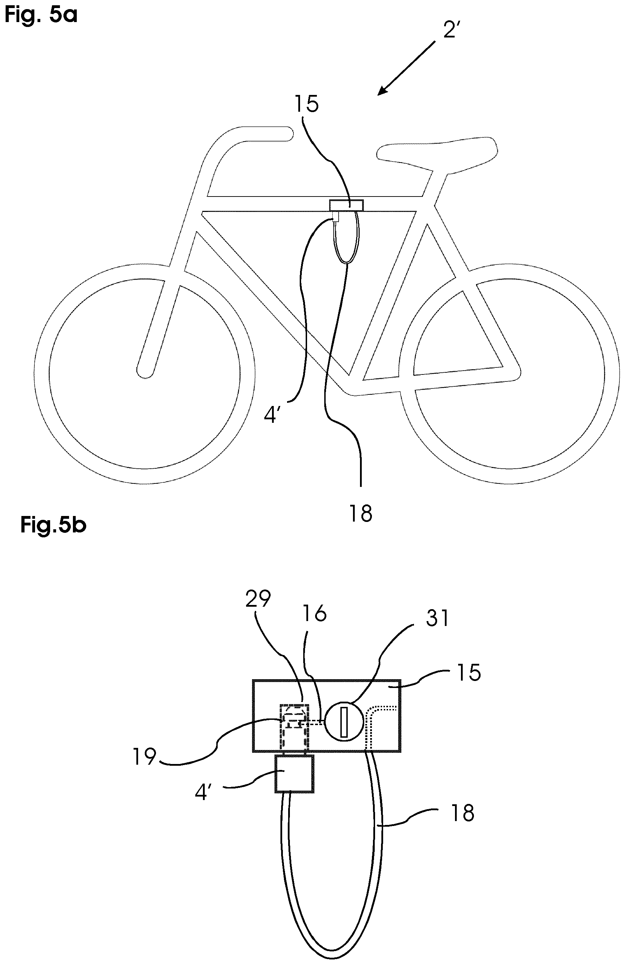

Die Figuren 4 und 5 zeigen einige Details des Riegels. Wie gezeigt, ist dieser über einen Hebel mit einem Magneten verbunden. Schrauben dienen als elektrische Kontakte.

Gerade im öffentlichen Bereich, wie bspw. an öffentlichen stationären Ladesäulen oder, im Falle von Vermietangeboten, an für die Öffentlichkeit frei zugänglichen Selbstbedienungsstationen, erfolgt keine Kontrolle, ob ein ordnungsgemäßer Anschluss zwischen der Ladesäule bzw. Station und dem Fahrzeug erfolgt. Außerdem gewährleisten die bekannten Anschlusssysteme keinen sicheren Schutz vor Eingriffen Dritter in die Verbindung zwischen Ladestation und Batterie.

Es besteht daher die Aufgabe, ein modulares Fahrzeugsystem mit erhöhter Betriebssicherheit zu schaffen, bei dem die Verbindung mit einem Modul besonders leicht, sicher, und geschützt vor dem Eingriff unberechtigter Personen erfolgen kann.

Die Aufgabe wird gelöst durch ein modulares Fahrzeugsystem nach Anspruch 1, ein Elektrofahrzeug nach Anspruch 10, ein Modul nach Anspruch 11 und ein entsprechendes Verfahren nach Anspruch 12. Bevorzugte Ausführungsformen der Erfindung sind in den Unteransprüchen beschrieben.

Ein Kernaspekt der Erfindung ist eine trennbare Verbindung zwischen einer Schnittstelle eines Elektrofahrzeugs und mindestens einem Anschlusselement eines Moduls, wobei Schnittstelle und Anschlusselement eine elektrische Verbindung zwischen Fahrzeug und Modul im verbundenen Betriebszustand herstellen und gleichzeitig eine mechanische Verriegelung der Komponenten ermöglichen.

Die Erfindung ermöglicht somit eine sichere Verbindung zwischen Fahrzeug und Modul, was die Betriebssicherheit erhöht und die Gefahr eines Eingriffs unberechtigter Personen reduziert. Besonders vorteilhaft ist hierbei, dass sowohl die elektrische Verbindung als auch die mechanische Verriegelung über die mindestens eine Schnittstelle des Fahrzeugs und das Anschlusselement des Moduls erfolgt. Das System ist somit besonders benutzerfreundlich und lässt sich schnell und einfach bedienen.

Im Rahmen der Erfindung wird unter einem Elektrofahrzeug ein ein- oder mehrspuriges elektrisch angetriebenes Fahrzeug und insbesondere ein Straßenfahrzeug verstanden. Bevorzugt ist das Elektrofahrzeug ein Elektroleichtfahrzeug, wie bspw. ein elektrisches Zwei- oder Dreirad bzw. ein Elektrofahrrad, Pedelec, Roller, Rollstuhl, Quad oder Kart. Insbesondere bevorzugt ist ein Elektroleichtfahrzeug mit einem Leergewicht von nicht mehr als 500 kg, weiter bevorzugt nicht mehr als 350 kg, jeweils ohne Zubehör, wie bspw. Batterien.

Erfindungsgemäß weist das Elektrofahrzeug mindestens ein Leistungsbordnetz zur Energieversorgung einer elektrischen Antriebseinheit und eine oder mehrere mit dem Leistungsbordnetz verbundene Schnittstellen zur Verbindung mindestens eines Moduls auf. Ferner ist ein erstes Verriegelungsmittel an der Schnittstelle vorgesehen.

Das mindestens eine Modul weist mindestens ein mit der Schnittstelle des Elektrofahrzeugs trennbar verbindbares Anschlusselement, eine elektrische Anordnung und ein am Anschlusselement angeordnetes zweites Verriegelungsmittel auf, das zum Eingriff mit dem ersten Verriegelungsmittel ausgebildet ist. Fahrzeug und Modul können naturgemäß weitere Komponenten aufweisen, auf die jedoch vorliegend nicht näher eingegangen wird.

Das Leistungsbordnetz des Elektrofahrzeugs ist zur Energieversorgung der elektrischen Antriebseinheit ausgelegt und verbindet mindestens die Antriebseinheit mit der mindestens einen Schnittstelle. Das Leistungsbordnetz kann naturgemäß grundsätzlich weitere entsprechend ausgebildete Schnittstellen, elektrische Komponenten oder Baugruppen des Fahrzeugs verbinden, wie bspw. eine oder mehrere interne Batterien, Generatoren, Brennstoffzellen, DC/DC-Wandler, Motoren oder anderweitige Komponenten.

Aufgrund der Anforderung hinsichtlich einer Energieversorgung der elektrischen Antriebseinheit ist das Leistungsbordnetz bevorzugt für einen elektrischen Strom von mindestens 3A, insbesondere mindestens 5A bei einer Spannung von 10V - 100V, insbesondere 24V - 60V ausgelegt. Besonders bevorzugt ist das Leistungsbordnetz ein Gleichstromleistungsnetz, insbesondere bevorzugt ein 42V DC Leistungsnetz.

Je nach Ausgestaltung und Typ des Fahrzeugs kann neben dem Leistungsbordnetz bevorzugt ein separates Hilfsbordnetz vorgesehen sein, welches weitere elektrische Baugruppen, wie Steuerungen, Armaturen, Bedienelemente und/oder Beleuchtungseinrichtungen mit elektrischer Energie versorgt. Insbesondere bevorzugt ist das Hilfsbordnetz für eine Spannung von 12V bzw. 14V ausgelegt. Das Hilfsbordnetz kann eine eigene Spannungsversorgung, bspw. eine Batterie, aufweisen, oder bspw. mittels eines Konverters aus dem Leistungsbordnetz versorgt sein.

Im Rahmen der vorliegenden Erfindung wird unter einer Batterie naturgemäß eine wiederaufladbare Batterie verstanden, wie bspw. ein oder mehrere Akkumulatoren.

Die elektrische Antriebseinheit dient der Umwandlung von elektrischer Energie in mechanische Arbeit und kann bspw. einen oder mehrere Elektromotoren aufweisen. Hierbei ist die elektrische Antriebseinheit bevorzugt als Hauptantrieb eingesetzt; alternativ oder ergänzend ist es jedoch ebenfalls denkbar, dass die elektrische Antriebseinheit zum unterstützenden Antrieb, bspw. bei Elektrofahrrädern unterstützend zu einem Tretantrieb, eingesetzt ist.

Die elektrische Antriebseinheit kann als ein Direktantrieb ausgebildet sein, d.h. als Antrieb ohne Getriebe, was hinsichtlich der Energieeffizienz vorteilhaft ist. Bei einem Elektroleichtfahrzeug ist die elektrische Antriebseinheit bevorzugt ein Scheibenläufermotor. Insbesondere bevorzugt ist die Antriebseinheit ein Getriebemotor. Je nach Ausgestaltung der Antriebseinheit ist eine Motorsteuerung vorgesehen, die zur Regelung der Antriebsleistung ausgebildet ist, bspw. mittels Strom- und/oder Spannungsregelung und/oder Pulsweitenmodulation (PWM).

Die mindestens eine Schnittstelle des Fahrzeugs ist zur Verbindung mit dem Anschlusselement des Moduls ausgebildet. Schnittstelle und Anschlusselement können hierbei sämtliche geeignete Ausgestaltungen aufweisen, die eine sichere elektrische Verbindung zwischen Modul und Leistungsbordnetz bereitstellen. Naturgemäß sollten Schnittstelle und Anschlusselement entsprechend mechanisch aufeinander angepasst ausgebildet sein.

Angesichts der möglichen Bedienung durch Fahrzeugbenutzer sollten sämtliche stromführenden Teile geeignet berührungsgeschützt ausgeführt sein, entsprechend auch Schnittstelle und Anschlusselement.

Das elektrische Modul weist neben dem Anschlusselement ferner eine elektrische Anordnung auf, wie bereits erwähnt. Die elektrische Anordnung ist zur Verbindung mit dem Leistungsbordnetz ausgelegt und kann sämtliche geeignete Ausgestaltungen aufweisen. Es kann sich hierbei im einfachsten Fall bspw. um eine elektrische Leiteranordnung handeln, die zur Verbindung mit dem Leistungsbordnetz über das Anschlusselement ausgebildet ist und bspw. das Leistungsbordnetz, gegebenenfalls mittels eines weiteren Steckverbinders, mit weiteren Bauteilen oder mit einem weiteren Modul verbindet. Insbesondere umfasst die elektrische Anordnung jedoch ein oder mehrere elektrische bzw. elektronische Bauteile und/oder Schaltungen.

Zweckmäßig ist die elektrische Anordnung eine Leistungsanordnung. Der Begriff der Leistungsanordnung umfasst im Rahmen der vorliegenden Erfindung sämtliche elektrische Schaltungsanordnungen und Bauteile, die zur Verbindung mit dem Leistungsbordnetz bzw. der Antriebseinheit und insbesondere zur Zufuhr von elektrischer Energie für die Antriebseinheit bzw. zum Abführen von seitens der Antriebseinheit erzeugter elektrischer Energie ausgebildet sind. Letzteres kann insbesondere dann der Fall sein, wenn die Antriebseinheit als Rekuperationsbremse oder als Generator eingesetzt ist. Bevorzugt ist die Leistungsanordnung für die Zufuhr bzw. zum Abführen eines elektrischen Stroms von mindestens 1A, besonders bevorzugt mindestens 5A ausgelegt.

Zweckmäßig ist die elektrische Anordnung eine Spannungs- bzw. Stromquelle, d.h. eine Energiequelle, und weist bspw. eine Batterie, ein Ladegerät, ein Solarpanel, eine Brennstoffzelle und/oder einen Generator auf. Das Modul kann somit insbesondere als Ladegerät oder Ladestation, d.h. als "Lademodul" ausgebildet sein.

Alternativ oder ergänzend kann die elektrische Anordnung auch als elektrischer Verbraucher, d.h. als Energiesenke ausgebildet sein und bspw. einen Bremswiderstand, eine Batterie im Ladebetrieb, einen Konverter oder eine Leistungseinspeisung für das Stromnetz ggf. mit Wechselrichter für eine "Vehicle-to-Grid"-Kopplung aufweisen.

Die erfindungsgemäß vorgesehenen Verriegelungsmittel können sämtliche geeignete Ausgestaltungen aufweisen, um Anschlusselement und Schnittstelle in einer Verriegelungsposition miteinander zu verriegeln, d.h. mechanisch aneinander zu fixieren, so dass ein unbeabsichtigtes Trennen des Moduls vom Fahrrad vermieden wird. Somit ist es bspw. möglich, ein Trennen von Fahrzeug und Modul "unter Last" zu vermeiden, was die Betriebssicherheit deutlich erhöht. Ferner kann, je nach Ausgestaltung, auch ein unberechtigtes Entfernen des Moduls vom Fahrzeug verhindert werden, wodurch ein gewisser Diebstahlschutz gegeben ist.

Bevorzugt sind die Verriegelungsmittel als korrespondierende Elemente ausgeführt. Hierbei kann eines der Verriegelungselemente bspw. als Nut, Ausnehmung oder Öffnung ausgebildet sein, in welche das jeweils andere Verriegelungselement eingreift, welches bevorzugt als Stift oder Bolzen ausgebildet ist. Insbesondere bevorzugt ist das zweite Verriegelungsmittel zum formschlüssigen Eingriff mit dem ersten Verriegelungsmittel ausgebildet.

Die Verriegelungsmittel können einteilig oder mehrteilig ausgebildet sein, wobei das erste Verriegelungsmittel bevorzugt integral mit der Schnittstelle ausgebildet ist. Zweckmäßig ist das zweite Verriegelungsmittel integral mit dem Anschlusselement ausgebildet.

Falls das Fahrzeug mehrere Schnittstellen aufweist, sollte bevorzugt jede der Schnittstellen ein zugeordnetes Verriegelungsmittel aufweisen.

Erfindungsgemäß ist mindestens das erste oder das zweite Verriegelungsmittel von einer freien Position in eine Verriegelungsposition und umgekehrt bewegbar. Es können jedoch auch beide Verriegelungsmittel bewegbar ausgebildet sein. Bevorzugt ist mindestens das zweite, d.h. das modulseitige Verriegelungsmittel bewegbar ausgebildet, wodurch die fahrzeugseitige Schnittstelle vorteilhaft besonders einfach und kompakt ausgebildet sein kann.

Das jeweilige Verriegelungsmittel kann bspw. so ausgebildet sein, dass dieses linear von der freien Position in die Verriegelungsposition bewegbar ist. Je nach Anwendung kann das entsprechende Verriegelungsmittel jedoch auch hier mehrere überlagerte Bewegungen, bspw. alternativ oder ergänzend schwenk-, bzw. drehbar ausgebildet sein, wobei das Verriegelungsmittel bevorzugt durch eine besonders einfach zu realisierende Schiebebewegung von der freien Position in die Verriegelungsposition bewegbar ist. Bevorzugt ist mindestens ein Verriegelungsmittel in einer Richtung bewegbar, senkrecht zu einer Verbindungs- bzw. Trennrichtung von Schnittstelle und Anschlusselement, d. h. senkrecht zu der Richtung, in der Schnittstelle bzw. Anschlusselement zu bewegen ist, um miteinander in Eingriff zu kommen, bzw. die Verbindung zu trennen.

Im Rahmen der vorliegenden Erfindung wird unter einer "freien Position" bzw. "Entriegelungsposition" eine Position der Verriegelungsmittel verstanden, die ein Trennen des Anschlusselements von der Schnittstelle grundsätzlich erlaubt. Naturgemäß kann eine weitere Sicherung oder ein Verschluss an Fahrzeug und/oder Modul angeordnet sein, die selbst in der freien Position eine selbstständige Trennung des Anschlusselements von der Schnittstelle verhindert, wie bspw. eine zusätzliche mechanische und/oder magnetische Rastierung bzw. Fixierung.

In der Verriegelungsposition sind, wie bereits eingangs diskutiert, Anschlusselement und Schnittstelle miteinander verriegelt, d.h. mechanisch derart fixiert, dass ein unbeabsichtigtes Trennen des Moduls vom Fahrzeug vermieden wird. Die beiden Verriegelungsmittel sind in dieser Position derart in Eingriff miteinander, dass ein Trennen von Anschlusselement und Schnittstelle, d.h. eine größere Bewegung dieser Bauteile relativ zueinander in der Trennrichtung, blockiert ist. Die Haltekraft der Verbindung zwischen Anschlusselement und Schnittstelle durch die Verriegelung ist bevorzugt derart, dass im verriegelten Zustand ein Auseinanderwuchten von Schnittstelle und Anschlusselement mithilfe des Körpergewichtes einer Person verhindert wird. Hierzu sollte die verriegelte Verbindung zwischen Anschlusselement und Schnittstelle bevorzugt für eine Haltekraft von mindestens 500 N, bevorzugt 1000 N, besonders bevorzugt mindestens 2000 N, vorzugsweise mindestens 4000 N und vorteilhafterweise mindestens 6000 N ausgebildet sein.

Das mindestens eine Verriegelungsmittel kann derart ausgebildet sein, dass dieses manuell zwischen der freien Position und der Verriegelungsposition bewegbar ist. Hierzu kann das jeweilige Verriegelungsmittel mit einem geeigneten Betätigungselement, bspw. mit einem entsprechenden manuell zu betätigenden Druckknopf oder Hebel ausgebildet sein.

Bevorzugt ist das Verriegelungsmittel mit einem abschließbaren Betätigungselement, wie bspw. einem Schloss und insbesondere einem Schließzylinder ausgebildet. Hierdurch ist ein verbesserter Schutz gegenüber Eingriffen Dritter, wie bspw. Diebstahl, ermöglicht.

Erfindungsgemäß ist am ersten und/oder zweiten Verriegelungsmittel ein elektrisch betätigbarer Verriegelungsantrieb angeordnet, der dazu ausgelegt ist, mindestens eines, d.h. das erste und/oder das zweite der Verriegelungsmittel zwischen der freien Position und der Verriegelungsposition zu bewegen.

Der elektrisch betätigbare Verriegelungsantrieb kann hierzu sämtliche geeignete Ausgestaltungen aufweisen und bspw. als Elektromotor ausgebildet sein. Der Verriegelungsantrieb kann sowohl direkt, als auch über ein weiteres mechanisches System, wie bspw. eine Antriebsschnecke oder ein Zahnradsystem, mit dem jeweiligen Verriegelungsmittel verbunden sein, um dieses zwischen der freien Position und der Verriegelungsposition zu bewegen.

Der Antrieb für das Verriegelungsmittel kann sowohl am Elektrofahrzeug als auch am Modul angeordnet sein. Sofern beide Verriegelungsmittel bewegbar ausgebildet sind, kann sowohl am Elektrofahrzeug als auch am Modul jeweils ein zugehöriger Verriegelungsantrieb angeordnet sein.

Besonders bevorzugt ist der Verriegelungsantrieb an dem modulseitigen Anschlusselement angeordnet. Hierdurch ist eine besonders einfache und kompakte fahrzeugseitige Schnittstelle ermöglicht. Ferner sind somit im Falle eines Lademoduls mechanisch bewegbare Teile nicht fahrzeugseitig angeordnet, wodurch ein besonders vorteilhafter Schutz gegenüber äußeren Einflüssen wie bspw. Feuchtigkeit und mechanischer Beschädigung durch Erschütterungen während des Betriebs des Fahrzeugs gegeben ist. Außerdem kann, bspw. im Falle von Störungen, unabhängig vom Elektrofahrzeug auf den Verriegelungsantrieb zugegriffen werden, um bspw. bei Reparaturen oder Wartungsarbeiten Fahrzeug und Modul leicht voneinander zu trennen.

Erfindungsgemäß weist das Modul eine mit dem Verriegelungsantrieb verbundene Modulsteuerung auf. Die Modulsteuerung dient hierbei insbesondere dazu, die Position des zweiten Verriegelungsmittels festzulegen und den Verriegelungsantrieb entsprechend zu steuern.

Die Modulsteuerung kann hierbei bspw. einen Microcontroller oder ein anderes geeignetes elektronisches Bauteil, ggf. mit einer entsprechenden Programmierung, aufweisen.

Gemäß der Erfindung weist das Elektrofahrzeug ferner eine Steuerungseinrichtung auf. Die Modulsteuerung ist zur Kommunikation mit der Steuerungseinrichtung und insbesondere dazu ausgebildet, um beim Verbinden des Anschlusselementes mit der Schnittstelle mindestens ein Identifikationssignal an die Steuerungseinrichtung zu senden. Die Steuerungseinrichtung ist dazu ausgebildet, das mindestens eine Identifikationssignal zu empfangen, mit mindestens einem Kompatibilitätsparameter zu vergleichen und im Falle, dass das Identifikationssignal mit dem Kompatibilitätsparameter übereinstimmt, ein erstes Aktivierungssignal an den mindestens einen Verriegelungsantrieb zu senden, um das Anschlusselement mit der Schnittstelle zu verriegeln.

Vorteilhaft wird die Schnittstelle des Elektrofahrzeuges somit nur dann mit dem Anschlusselement des Moduls verriegelt, wenn bspw. die Kompatibilität bzw. Berechtigung hierzu sichergestellt ist. Es ist somit beispielsweise möglich zu gewährleisten, dass nur kompatible bzw. berechtigte Fahrzeuge an Modulen, wie bspw. einer Ladestation oder auch nur kompatible bzw. berechtigte Module, wie bspw. Original-Batterien, mit dem Fahrzeug verwendet und verriegelt werden können.

Das Aktivierungssignal kann hierbei direkt von der Steuerungseinrichtung oder indirekt bspw. über die Modulsteuerung an den Verriegelungsantrieb gesendet werden. Das Aktivierungssignal kann hierbei ein entsprechend geeignetes, bevorzugt elektrisches Signal sein; besonders bevorzugt ist das Aktivierungssignal ein digitales Signal.

Die Steuerungseinrichtung kann zur Kommunikation mit dem mindestens einen Modul insbesondere ein oder mehrere Mikroprozessoren oder eine entsprechend eingerichtete Computereinheit mit einer entsprechenden, in einem Speicher abgelegten Programmierung aufweisen.

Die Steuerungseinrichtung kann ein- oder mehrteilig ausgebildet sein, wobei eine zentrale Steuerungseinrichtung bevorzugt ist. Die Steuerungseinrichtung kann auch mit weiteren Komponenten des Fahrzeugs integriert ausgebildet sein, bspw. mit einer Motorsteuerung der elektrischen Antriebseinheit. Bevorzugt entspricht die Steuerungseinrichtung einem "Energybus-Controller (EBC)".

Die Modulsteuerung kann, wie eingangs erwähnt, so ausgelegt sein, dass mindestens beim Verbinden des Anschlusselements des Moduls mit der Schnittstelle des Elektrofahrzeugs das Identifikationssignal an die Steuerungseinrichtung gesendet wird.

Die Kommunikation kann bspw. drahtlos mit einem geeigneten Protokoll erfolgen. Steuerungseinheit und Modulsteuerung sollten bei einer drahtlosen Kommunikation entsprechende Empfänger- bzw. Sendeeinheiten aufweisen. Nicht zwingend erforderlich, wenn auch bevorzugt, ist hierbei eine bidirektionale Kommunikation; wobei es grundsätzlich ausreichend ist, wenn die Modulsteuerung das Identifikationssignal an die Steuerungseinrichtung senden kann. So wäre es bspw. möglich, dass die Steuerungseinrichtung ein RFID-Lesegerät aufweist, welches die mit einem RFID-Chip ausgebildete Modulsteuerung beim oder kurz vor dem Verbinden des Anschlusselements mit der Schnittstelle abfragt. Die Modulsteuerung kann somit aktiv als auch passiv, bspw. als Transponder, ausgebildet sein.

Alternativ zu einer drahtlosen Kommunikation können Steuerungseinrichtung und Modulsteuerung auch zur Kommunikation über eine entsprechende Kommunikationsleitung ausgebildet sein; bspw. wäre es denkbar, dass sowohl Steuerungseinrichtung als auch Modulsteuerung über das Leistungsbordnetz und/oder ein ggf. vorhandenes Hilfsbordnetz miteinander kommunizieren, indem bspw. das Identifikationssignal entsprechend einer "Powerline-Kommunikation" moduliert übertragen wird. Bevorzugt ist das Identifikationssignal ein digitales Signal, was insbesondere hinsichtlich der Zuverlässigkeit vorteilhaft ist.

Das Identifikationssignal ermöglicht der Steuerungseinrichtung einen Vergleich mit mindestens einem Kompatibilitätsparameter und somit eine Entscheidung hinsichtlich der Kompatibilität bzw. Berechtigung zum Betrieb des Moduls mit dem Fahrzeug. Bspw. kann das Identifikationssignal der Steuerungseinrichtung eine Entscheidung hinsichtlich der Kompatibilität der elektrischen Anordnung des Moduls mit dem Leistungsbordnetz ermöglichen, d.h. eine Prüfung, ob die Anordnung sicher mit dem Leistungsbordnetz verbunden werden kann.

Im einfachsten Fall erlaubt das Identifikationssignal eine Identifikation des Moduls, so dass, ggf. nach Abfrage einer entsprechenden in der Steuerungseinrichtung vorgesehenen Speichereinheit, eine Prüfung möglich ist, ob das Modul mit dem Elektrofahrzeug verbunden werden darf bzw. ob das Modul mit dem Leistungsbordnetz und somit mit dem Fahrzeug kompatibel ist. So kann das Identifikationssignal einem Identifikationsparameter, wie bspw. einen Zugangs- oder PIN-Code, einer Seriennummer und/oder einer Typen-ID, ggf. mit Hersteller-ID, entsprechen. Alternativ oder ergänzend kann das Identifikationssignal einer Funktions-ID hinsichtlich der Funktionalität der elektrischen Komponente entsprechen, wie bspw. "Energiequelle" oder "Energiesenke", bzw. "Batterie", "Ladegerät" oder "Solarpanel".

Der mindestens eine Kompatibilitätsparameter kann bspw. einen oder mehrere Vergleichswerte und/oder einen oder mehrere Schwellenwerte aufweisen. Naturgemäß kann die Steuerungseinrichtung auch zum Vergleich von mehreren Kompatibilitätsparametern ausgebildet sein. Der mindestens eine Kompatibilitätsparameter kann in der Steuerungseinrichtung fest vorgegeben oder bevorzugt aus einer Speichereinheit durch die Steuerungseinheit abgefragt werden. Alternativ oder ergänzend kann eine Messeinheit mit der Steuerungseinheit verbunden sein, um eine elektrische Größe des Leistungsbordnetzes, wie bspw. Spannung oder Stromfluss zu messen und daraus entsprechend einen oder mehrere Kompatibilitätsparameter zu ermitteln.

Bevorzugt sendet die Steuerungseinrichtung nach erfolgter Kompatibilitätsprüfung, somit im Falle, dass das Identifikationssignal mit dem Kompatibilitätsparameter übereinstimmt, ein zweites Aktivierungssignal an mindestens eine Schalteinheit, um die elektrische Anordnung mit dem Leistungsbordnetz zu verbinden.

Die Schalteinheit sorgt für eine schaltbare, trennbare Verbindung der elektrischen Anordnung des Moduls mit dem Leistungsbordnetz. Grundsätzlich sollte die Schalteinheit derart ausgebildet sein, dass vor der Aktivierung der Schalteinheit durch die Steuerungseinrichtung die elektrische Anordnung sicher vom Leistungsbordnetz getrennt ist, somit auch in dem Zeitraum zwischen dem Verbinden des Anschlusselements mit der Schnittstelle und der Aktivierung der Schalteinheit durch die Steuerungseinrichtung.

Die vorliegende Ausbildung sorgt somit für eine sichere Trennung der elektrischen Anordnung des Moduls vom Leistungsbordnetz vor der Kompatibilitätsprüfung. Im Falle, dass das Identifikationssignal mit dem Kompatibilitätsparameter übereinstimmt, kann bspw. zunächst die vorstehend beschriebene Verriegelung von Schnittstelle und Anschlusselement durch Senden des ersten Aktivierungssignals erfolgen und dann die elektrische Verbindung zwischen Leistungsbordnetz und elektrischer Anordnung des Moduls hergestellt werden. Somit wird die Betriebssicherheit dadurch weiter erhöht, dass zunächst die ordnungsgemäße Verbindung und Verriegelung des Moduls am Fahrzeug sichergestellt wird, bevor die elektrische Verbindung zwischen Leistungsbordnetz und elektrischer Anordnung des Moduls hergestellt wird.

Bevorzugt ist die Steuerungseinrichtung daher ausgebildet, um zunächst das erste Aktivierungssignal an den Verriegelungsantrieb und dann das zweite Aktivierungssignal an die Schalteinheit zu senden.

Zur Betätigung der Schalteinheit ist diese mit der Steuerungseinrichtung zum Empfang des zweiten Aktivierungssignals geeignet verbunden, wobei naturgemäß neben einer direkten Verbindung auch eine indirekte Verbindung, bspw. über weitere Komponenten des Fahrzeugs oder des Moduls, möglich ist.

Die Schalteinheit kann zum ein- oder mehrpoligen Schalten der Verbindung zwischen elektrischer Anordnung und Leistungsbordnetz ausgebildet sein, solange sichergestellt ist, dass vor der Aktivierung durch die Steuerungseinrichtung kein nennenswerter elektrischer Strom zwischen der Anordnung und dem Leistungsbordnetz fließt. Bevorzugt ist die Schalteinheit zum allpoligen Schalten der Verbindung zwischen elektrischer Anordnung und Leistungsbordnetz ausgebildet, was die Betriebssicherheit weiter vorteilhaft erhöht. Die Schalteinheit kann diskret, bspw. als Relais oder Schütz, als auch als integrierter Schaltkreis, bspw. als MOSFET, ausgebildet sein.

Die Schalteinheit kann hierbei ein- oder mehrteilig ausgebildet und grundsätzlich im Fahrzeug angeordnet sein, was hinsichtlich Gewicht und Baugröße des Moduls vorteilhaft ist. Bevorzugt ist jedoch die Schalteinheit in dem mindestens einen Modul vorgesehen. Hierdurch kann das Leistungsbordnetz in einfacher Weise durch Hinzufügung weiterer Schnittstellen erweitert werden, ähnlich eines Bussystems. Im Falle von mehreren Modulen sollte naturgemäß jedes Modul eine entsprechende Schalteinheit aufweisen.

Bevorzugt ist die Schalteinheit integral mit dem Anschlusselement ausgebildet, wodurch eine besonders kompakte Bauform erreicht wird. Besonders bevorzugt ist die Modulsteuerung integral mit dem Anschlusselement und insbesondere integral mit der Schalteinheit ausgebildet. Zweckmäßig ist ein optischer Indikator, wie bspw. eine LED, mit der Schalteinheit zur Anzeige des Verbindungszustands verbunden.

Nach einer bevorzugten Weiterbildung der Erfindung kann die Steuerungseinrichtung dazu ausgelegt sein, mindestens einen elektrischen Betriebsparameter der Anordnung aus dem Identifikationssignal zu ermitteln und den Betriebsparameter mit mindestens einem elektrischen Kompatibilitätsparameter des Leistungsbordnetzes zu vergleichen.

Hierdurch ist eine vorteilhafte Kompatibilitätsprüfung anhand der elektrischen Eigenschaften der zu verbindenden Netze ermöglicht, was die Sicherheit des Systems weiter erhöht. Der elektrische Betriebsparameter der Anordnung und der elektrische Kompatibilitätsparameter des Leistungsbordnetzes kann hierbei jede für den Vergleich geeignete elektrische Größe oder Bereich sein, wie bspw. Spannung, Strom, Leistung und/oder Batteriekapazität.

Naturgemäß kann vorgesehen sein, mehrere elektrische Betriebsparameter der Anordnung mit entsprechen Kompatibilitätsparametern zu vergleichen.

Die Modulsteuerung kann bspw. ausgebildet sein, um den mindestens einen elektrischen Betriebsparameter aus einem modulseitigen Speicher abzufragen und anschließend ein entsprechendes Identifikationssignal an die Steuerungseinheit des Fahrzeugs zu senden. Dies ist insbesondere dann vorteilhaft, wenn der elektrische Betriebsparameter einem Arbeitsbereich der elektrischen Anordnung des Moduls entspricht, bspw. dem zulässigen Spannungsbereich und/oder einem maximal zulässigen Strom der Anordnung.

Alternativ oder ergänzend kann die Modulsteuerung jeweils mindestens eine Messeinheit aufweisen, um den elektrischen Betriebsparameter durch Messung zu ermitteln. Im Falle einer Spannungsquelle, wie einer Batterie oder einem Ladegerät, ist es somit möglich, die aktuelle Spannung zu ermitteln und ein entsprechendes Identifikationssignal an die Steuerungseinrichtung zu senden.

In gleicher Weise kann die Steuerungseinrichtung, wie eingangs diskutiert, den mindestens einen elektrischen Kompatibilitätsparameter des Leistungsbordnetzes aus der Speichereinheit bzw. einer im Fahrzeug vorgesehenen Messeinheit ermitteln.

Insbesondere bevorzugt weist sowohl die Modulsteuerung mindestens eine Messeinheit zur Messung der Spannung der elektrischen Anordnung als auch die Steuerungseinrichtung eine fahrzeugseitige Messeinheit zur Messung der Spannung des Leistungsbordnetzes auf. Zweckmäßig kann die Modulsteuerung eine zweite Messeinheit aufweisen, um nach der Verbindung mit einer der Schnittstellen zu ermitteln, ob das Leistungsbordnetz überhaupt spannungsversorgt ist.

Bevorzugt übermittelt die Modulsteuerung das Identifikationssignal, welches mindestens der Spannung der elektrischen Anordnung entspricht. Die Steuerungseinrichtung ermittelt die Spannung der elektrischen Anordnung aus dem Identifikationssignal und vergleicht die Spannung der elektrischen Anordnung mit der Spannung des Leistungsbordnetzes. Die Steuerungseinrichtung sendet in diesem Fall das Aktivierungssignal an die Schalteinheit, wenn die beiden Spannungen nicht wesentlich voneinander abweichen, d.h. bevorzugt um nicht mehr als ± 0,5 V, insbesondere nicht mehr als ± 0,15 V und besonders bevorzugt nicht mehr als ± 0,05 V.

Naturgemäß ist es je nach Anwendung nicht ausgeschlossen, dass das Identifikationssignal mehreren Betriebsparametern und/oder Identifikationsparametern entspricht und die Steuerungseinrichtung zum Vergleich dieser mit entsprechenden Kompatibilitätsparametern ausgebildet ist.

In einer besonders bevorzugten Ausführungsform ist die Steuerungseinrichtung ferner dazu ausgebildet, ein Deaktivierungssignal an den mindestens einen Verriegelungsantrieb zu senden, um das Anschlusselement und die Schnittstelle zu Entriegeln.

Hierzu kann die Steuerungseinrichtung bspw. mit einem entsprechenden Bedienfeld verbunden sein, so dass das Deaktivierungssignal entsprechend einer Benutzereingabe gesendet wird, bspw. wenn der Benutzer die Trennung des Moduls vom Fahrzeug verlangt. Alternativ oder ergänzend kann die Steuerungseinrichtung ausgebildet sein, um das Deaktivierungssignal automatisch zu senden, bspw. im Falle der Verbindung eines Lademoduls, wenn der Ladevorgang beendet ist.

Gemäß einer bevorzugten Weiterbildung der Erfindung ist die Schnittstelle und/oder das Anschlusselement als Steckverbinder ausgebildet. Zweckmäßig sind sowohl Schnittstelle, als auch Anschlusselement, als korrespondierend ausgebildete Steckverbinder ausgebildet.

Im Rahmen der vorliegenden Erfindung wird unter einem Steckverbinder ein trennbares Bauteil verstanden, welches möglichst einfach mit einem korrespondierenden Bauteil zu verbinden ist und im verbundenen Zustand eine elektrische Verbindung des Fahrzeugs mit dem Modul erlaubt.

Der Steckverbinder sollte bevorzugt derart ausgebildet sein, dass eine sichere Verbindung zwischen Leistungsbordnetz des Fahrzeugs und der elektrischen Anordnung des Moduls möglich ist. Insbesondere sollte der Steckverbinder an die elektrischen Anforderungen der jeweiligen Anordnung, besonders hinsichtlich Strom und Spannung, ausgebildet sein. Zweckmäßig ist der Steckverbinder für einen elektrischen Strom von mindestens 3A, insbesondere mindestens 5A bei einer Spannung von 10V - 100V, insbesondere 12V - 48V ausgelegt.

Übliche Steckverbinder sind bspw. Buchsen, die als Aufnahmen für Stecker ausgelegt sind. Es ist hierbei möglich, das Anschlusselement oder die Schnittstelle als Buchse oder Stecker auszuführen. Vorteilhaft, da besonders wartungsarm und pflegeleicht, wird das modulseitige Anschlusselement als Buchse ausgeführt. In diesem Falle kann die Schnittstelle als zur Buchse korrespondierender Stecker ausgebildet sein.

Bevorzugt weist der Steckverbinder mindestens zwei elektrische Kontaktelemente auf, so dass das Leistungsbordnetz mit der elektrischen Anordnung verbunden werden kann. Besonders bevorzugt weist der Steckverbinder ferner Kontaktelemente für die Übertragung eines Kommunikationssignals, wie bspw. eines CAN-Bussystems, auf. Zweckmäßig ist der Steckverbinder alternativ oder ergänzend zur elektrischen Verbindung des eingangs diskutierten Hilfsbordnetzes mit dem Modul ausgebildet.

Gemäß einer besonders bevorzugten Weiterbildung der Erfindung ist zwischen der Schnittstelle und dem Elektrofahrzeug und/oder dem Anschlusselement und dem Modul ein flexibles Verbindungsmittel angeordnet. Hierdurch wird die Bedienbarkeit des Fahrzeugsystems weiter vereinfacht und ein Verbinden des Moduls mit dem Fahrzeug weiter erleichtert.

Das Verbindungsmittel kann hierbei ein- oder mehrteilig ausgebildet sein. Bevorzugt ist das Verbindungsmittel schlauch- bzw. kabelartig aufgebaut und weist neben entsprechenden elektrischen Leitern zur Verbindung des Leistungsbordnetzes mit der elektrischen Anordnung des Moduls ein Sicherungselement aus einem gegen mechanische Belastungen widerstandsfähigen Material, wie bspw. eine metallische Armierung oder ein Stahlseil, auf.

Durch das flexible Verbindungsmittel ergeben sich für den Fahrzeugbenutzer verbesserte Verbindungsmöglichkeiten zwischen Modul und Elektrofahrzeug. So können bspw. Fahrräder beabstandet an einer Ladestation abgestellt und mit dieser verbunden und verriegelt werden. Auch ist es bspw. möglich, Module mit dem Fahrzeug zu Verbinden und zu Verriegeln, wobei die Module jedoch flexibel, z.B. am Lenker des Fahrzeuges, positioniert werden können. Ferner kann das Fahrzeug bspw. mit dem Verbindungsmittel besonders einfach an einem Gegenstand wie bspw. einem Fahrradständer angeschlossen und zusätzlich mit dem Modul verbunden werden.

Besonders bevorzugt ist eine Ausführungsform, bei dem am Fahrzeug eine zusätzliche Aufnahme mit einem Verriegelungsmittel für die Schnittstelle vorhanden ist, so dass das flexible Verbindungsmittel mit der Schnittstelle in die Aufnahme eingesteckt und verriegelt werden kann. Hierdurch ist eine Verwendung der Schnittstelle mit dem flexiblen Verbindungsmittel auch als "Kabelschloss" möglich.

Gemäß einer besonders bevorzugten Ausführungsform der Erfindung ist das erste oder zweite Verriegelungsmittel als Verriegelungsbolzen ausgebildet. Die genaue Ausgestaltung des Bolzens sollte je nach Anwendung gewählt sein; der Bolzen kann bspw. zylinderförmig oder aber auch kugelförmig ausgebildet sein. Der Bolzen kann zusätzliche Ausnehmungen oder Vorsprünge wie bspw. eine oder mehrere Nuten aufweisen. Verriegelungsbolzen sind besonders einfach herzustellen, wartungsarm und sind besonders einfach mit der bevorzugten Ausführungsform eines linear bewegbaren Verriegelungsmittels zu kombinieren. Zweckmäßig ist das jeweils andere Verriegelungsmittel als Aufnahme für den Verriegelungsbolzen ausgebildet, so dass eine sichere Verbindung von Modul und Fahrzeug möglich ist.

Nach einer weiter bevorzugten Ausführungsform ist eine magnetische Fixierung vorgesehen, um die Schnittstelle und das Anschlusselement aneinander zu fixieren und locker zu positionieren. Die magnetische Fixierung kann sowohl am Anschlusselement und/oder an der Schnittstelle angeordnet sein. Sie erlaubt eine genau Positionierung der Schnittstelle und des Anschlusselements zueinander um eine störungsfreie und exakte Verriegelung zu ermöglichen. Ferner bleibt hierdurch auch nach erfolgter Entriegelung das Anschlusselement an der Schnittstelle, so dass dieses, bspw. bei einer Ausbildung mit einem flexiblen Verbindungsmittel, nicht unkontrolliert seine Position verlässt und unbeabsichtigt beschädigt wird.

Zweckmäßig ist das Elektrofahrzeug zur Verbindung von zwei oder mehr Modulen ausgebildet. Insbesondere hier ergeben sich durch die Kompatibilitätsprüfung deutliche Vorteile. Naturgemäß sollte das Elektrofahrzeug bevorzugt zwei oder mehr Schnittstellen aufweisen.

Die Schalteinheit kann in diesem Fall zum separaten Verbinden der zwei oder mehr Module mit dem Leistungsbordnetz ausgebildet sein, so dass im Falle einer Inkompatibilität das entsprechende Modul zwar nicht mit dem Leistungsbordnetz verbunden wird, jedoch eine Verbindung der weiteren Module möglich ist.

Alternativ oder ergänzend kann die Steuerungseinheit im Falle der Verbindung von zwei oder mehr Modulen zweckmäßig eine Prioritätssteuerung aufweisen, um zusätzlich zu der Kompatibilitätsprüfung anhand der Priorität zu ermitteln, ob das jeweilige Modul mit dem Leistungsbordnetz verbunden werden kann. Hierzu kann die Steuerungseinheit bevorzugt ausgebildet sein, um das Identifikationssignal mit einem oder mehreren Prioritätsparametern zu vergleichen, so dass das Aktivierungssignal nur dann an die Schalteinheit gesendet wird, wenn das Identifikationssignal mit dem mindestens einen Prioritätsparameter übereinstimmt.

Bspw. ist es denkbar im Falle der Verbindung von mehreren Batteriemodulen eine Priorisierung anhand des derzeitigen Leistungsbedarfs der elektrischen Antriebseinheit vorzunehmen. Ebenfalls ist es möglich, eine Priorisierung anhand des Modultyps vorzusehen, so dass bspw. zunächst die Energie eines Solarpaneels zum Antrieb eingesetzt wird und ein Batteriemodul nur dann zugeschaltet wird, wenn das Solarpaneel keine ausreichende elektrische Leistung liefert. Naturgemäß kann auch ein nicht zugeschaltetes Modul trotzdem am Fahrzeug verriegelt bleiben.

Ferner kann das Elektrofahrzeug ein vom Leistungsbordnetz getrenntes Kommunikationsnetz aufweisen, welches die Steuerungseinrichtung mit der mindestens einen Schnittstelle verbindet. Das Kommunikationsnetz dient hierbei der Übermittlung mindestens des Identifikationssignals von der Modulsteuerung, nachdem das Modul mit der Schnittstelle des Fahrzeugs verbunden wurde. Naturgemäß kann das Kommunikationsnetz zur Verbindung weiterer Baugruppen des Fahrzeugs bzw. des Moduls ausgebildet sein, wie bspw. des Verriegelungsantriebs, der Schalteinheit, einer Instrumententafel, einer Bedieneinrichtung und/oder einer Motorsteuerung. Das Kommunikationsnetz kann hierbei bspw. elektrische Signalleitungen aufweisen; zweckmäßig ist das Kommunikationsnetz ein optisches Netz, d. h. ein entsprechend mit optischen Signalleitungen und Sender-/Empfängeranordnungen ausgebildetes Übertragungsnetzwerk. Bevorzugt ist das Kommunikationsnetz als Bussystem ausgebildet, insbesondere bevorzugt ist das Kommunikationsnetz ein CAN-Bussystem. Besonders bevorzugt sind Steuerungseinheit und Modulsteuerung zur Kommunikation über das CAN-open Protokoll ausgebildet.

Zweckmäßig sind Schnittstelle und/oder Anschlusselement ausgebildet, um die elektrische Anordnung mit dem Leistungsbordnetz und die Modulsteuerung mit dem Kommunikationsnetz zu verbinden. Das Anschlusselement erlaubt folglich die Übertragung von elektrischer Energie für die Antriebseinheit und ebenfalls eine separate Übertragung des Identifikations- bzw. Aktivierungssignals. Hierdurch wird die Benutzerfreundlichkeit vorteilhaft weiter erhöht, da bei der Verbindung des Moduls mit dem Fahrzeug lediglich ein Anschluss hergestellt werden muss.

Besonders bevorzugt sind Schnittstelle und/oder Anschlusselement ferner zur Verbindung der Modulsteuerung mit dem ggf. vorgesehenen Hilfsbordnetz ausgebildet, um die Modulsteuerung mit elektrischer Energie zu versorgen. Insbesondere bevorzugt sind Schnittstelle und/oder Anschlusselement zur Verbindung eines 42 V Leistungsbordnetzes, eines 12 V Hilfsbordnetzes und eines CAN-Bussystems (CAN high, CAN low) ausgebildet.

Gemäß eines weiteren Aspekts der vorliegenden Erfindung ist ein Verfahren zum Verbinden eines Elektrofahrzeuges, insbesondere eines Elektroleichtfahrzeugs mit einem Modul vorgesehen, wobei das Elektrofahrzeug mindestens ein Leistungsbordnetz, eine mit dem Leistungsbordnetz verbundene Schnittstelle und ein an der Schnittstelle angeordnetes erstes Verriegelungsmittel aufweist, und das Modul mindestens ein mit der Schnittstelle trennbar verbindbares Anschlusselement und ein am Anschlusselement angeordnetes zweites Verriegelungsmittel aufweist, welches zum Eingriff mit dem ersten Verriegelungsmittel ausgebildet ist. Hierbei wird das erste und/oder das zweite Verriegelungsmittel von einer freien Position in eine Verriegelungsposition gebracht, um das Anschlusselement an der Schnittstelle zu verriegeln.

Die zuvor erläuterte Verriegelung zwischen einem Elektrofahrzeug und einem Modul kann auch im Rahmen eines modularen Ladesystems vorteilhaft eingesetzt werden. Ein weiterer Aspekt der vorliegenden Erfindung betrifft daher ein modulares Ladesystem mit einer Ladeeinheit und mindestens einem Modul.

Die Ladeeinheit weist eine Ladeleitung und eine oder mehrere mit der Ladeleitung verbundene Schnittstellen zur Verbindung mindestens eines aufladbaren Moduls auf. Ferner weist die Ladeeinheit ein an der Schnittstelle angeordnetes erstes Verriegelungsmittel auf.

Das mindestens eine aufladbare Modul weist ein mit der Schnittstelle trennbar verbindbares Anschlusselement und eine elektrische Anordnung zur Verbindung mit der Ladeleitung auf. Ein zweites Verriegelungsmittel ist an dem Anschlusselement angeordnet und ist zum Eingriff mit dem ersten Verriegelungsmittel ausgebildet.

Hierbei ist mindestens eines der Verriegelungsmittel zwischen einer freien Position und einer Verriegelungsposition bewegbar, wobei in der freien Position das Anschlusselement von der Schnittstelle trennbar ist und in der Verriegelungsposition das Anschlusselement mit der Schnittstelle mechanisch verriegelt ist.

Die Ausgestaltung gemäß dem vorliegenden Aspekt erlaubt daher auch bei der Verbindung eines aufladbaren Moduls mit einer Ladeeinheit eine vorteilhaft erhöhte Betriebssicherheit durch die erfindungsgemäße Verriegelung zum Schutz vor bspw. unberechtigter Entnahme des aufladbaren Moduls.

Die elektrische Anordnung weist bevorzugt einen elektrischen Energiespeicher und insbesondere bevorzugt eine Batterieanordnung auf, wie bspw. einen oder mehrere Akkumulatoren. Zweckmäßig ist das aufladbare Modul daher ein Batteriemodul.

Die Ladeeinheit ist bevorzugt zur Verbindung mit einem Versorgungsnetz ausgelegt, bspw. einem 220V oder 110V Stromversorgungsnetz. Zweckmäßig weist die Ladeeinheit ein Netzteil auf, welches das Versorgungsnetz mit der Ladeleitung verbindet und für eine Anpassung und ggf. Überwachung von Strom und/oder Spannung ausgelegt ist. Die Ladeleitung kann hierbei ferner entsprechend dem vorstehend beschriebenen Leistungsbordnetz ausgebildet sein.

Hinsichtlich der Ausbildung der einzelnen Komponenten der Ladeeinheit und des aufladbaren Moduls wird auf die vorstehende Beschreibung des modularen Fahrzeugsystems Bezug genommen, wobei die Ausbildung der Komponenten der Ladeeinheit der entsprechenden Komponenten des Fahrzeugs entspricht.

Die Erfindung wird nachstehend anhand von Ausführungsbeispielen beschrieben. Es zeigt:
- Fig.1: ein Ausführungsbeispiel eines modularen Fahrzeugsystems mit einem Elektrofahrrad und einem Modul in einer schematischen Ansicht;
- Fig.2: eine teilweise horizontale Schnittdarstellung des Ausführungsbeispiels aus Fig.1;
- Fig.3: eine teilweise horizontale Schnittdarstellung des Ausführungsbeispiels aus Fig.1 im verbundenen und verriegeltem Zustand;
- Fig.4: eine schematische Ansicht eines zweiten Ausführungsbeispiels eines modularen Fahrzeugsystems im verriegelten Zustand;
- Fig.5a und 5b: ein Ausführungsbeispiel eines Elektrofahrzeugs zur Verwendung im modularen Fahrzeugsystem gemäß Fig.4;
- Fig. 6: ein Ausführungsbeispiel eines elektrischen Systems eines Elektrofahrzeugs in einer schematischen Ansicht;
- Fig.7: ein Ausführungsbeispiel eines Moduls in einer schematischen Ansicht;
- Fig.8: eine Detailansicht eines Anschlusselements des Moduls gemäß Fig.7;
- Fig.9: das Ausführungsbeispiel des elektrischen Systems gemäß Fig. 6 mit einem verbundenen Modul gemäß Fig.7 und
- Fig.10: ein Ausführungsbeispiel der Kommunikation beim Verbinden eines Moduls mit einem Elektrofahrzeug in einem schematischen Flussdiagramm,

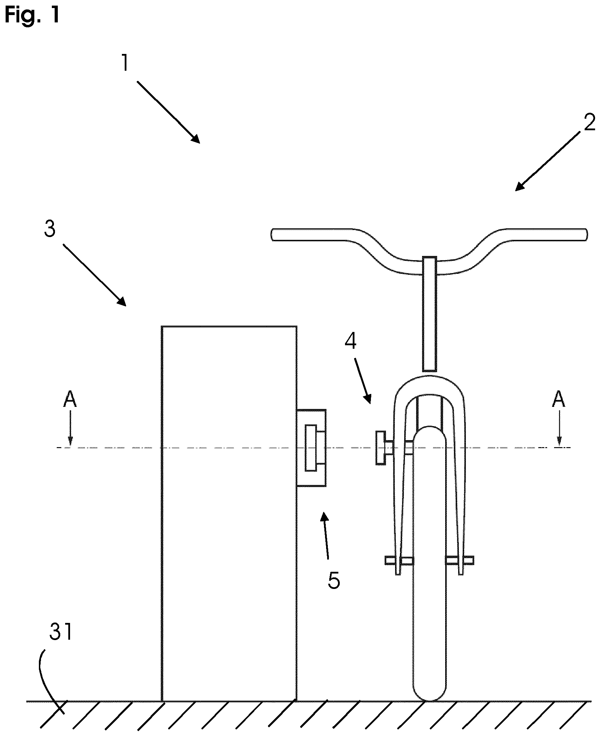

Figur 1 zeigt ein Ausführungsbeispiel eines modularen Fahrzeugsystems 1 in einer schematischen Ansicht bestehend aus einem Elektrofahrzeug 2, vorliegend einem Elektrofahrrad, und einem Modul in Form eines Lademoduls, nämlich einer Ladesäule 3. Das als Ladesäule 3 ausgebildete Modul ist vorliegend zur festen Verbindung mit dem Boden 31, bspw. im Außenbereich, ausgelegt und kann somit bspw. als öffentliches Ladeterminal in städtischen Umgebungen dienen.

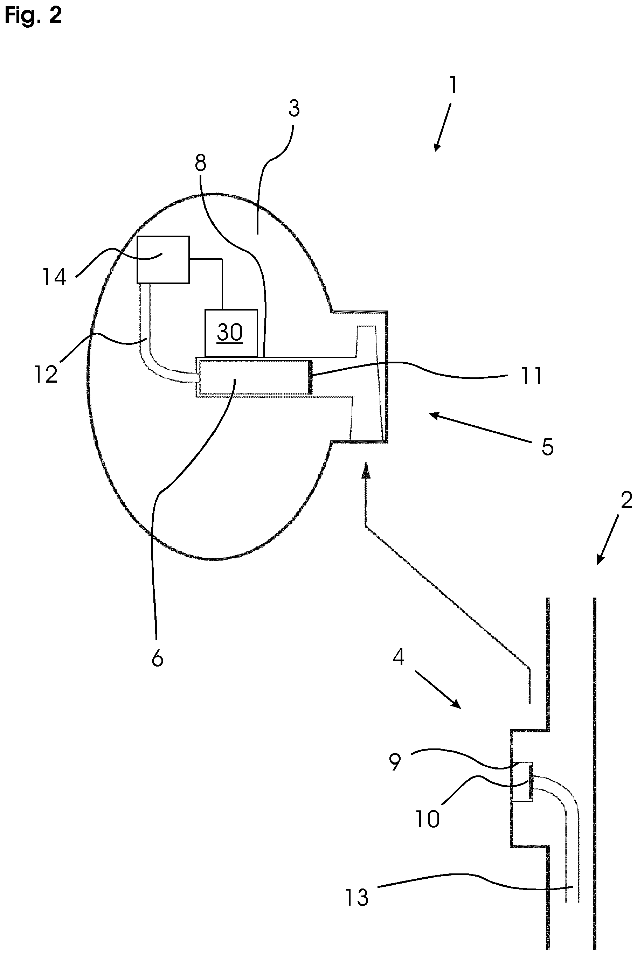

Das Fahrzeug 2 weist eine als Steckverbinder ausgebildete Schnittstelle 4 auf, die mit der Ladesäule 3 verbunden werden kann, um somit bspw. eine fahrradseitig angeordnete Batterie (nicht gezeigt) über die Ladesäule 3 zu laden. Hierzu weist das Fahrzeug 2 ein Leistungsbordnetz 13 auf (vgl. Fig. 2), welches mindestens die Schnittstelle 4 mit der Batterie sowie einer elektrischen Antriebseinheit (nicht gezeigt) im Fahrzeug verbindet. Das Leistungsbordnetz 13 ist gemäß des vorliegenden Ausführungsbeispiels ein Gleichstromnetz mit einer Betriebsspannung von 42 V DC. Schnittstelle 4 und Leistungsbordnetz 13 sind für einen Strom von ca. 20 A - 100 A ausgelegt.

Zur Verbindung des Fahrzeugs 2 mit der Ladesäule 3 wird dieses derart relativ zur Ladesäule 3 bewegt, dass die Schnittstelle 4 mit einer konisch ausgebildeten Aufnahme 5 für die Schnittstelle 4 in Eingriff kommt, was mit Bezug auf die nachfolgenden Figuren 2-3 näher erläutert wird.

Figur 2 zeigt eine schematische, horizontale Schnittansicht des modularen Fahrzeugsystems 1 gemäß Fig. 1 entlang der Linie A-A, wobei das Fahrzeug 2 in Fig. 2 nur teilweise dargestellt ist. Wie gezeigt, weist die Ladesäule 3 eine ovale Grundform auf, wobei die Aufnahme 5 (siehe auch Fig. 1) seitlich zur Verbindung mit dem Fahrzeug 2 angeordnet ist.

Die Aufnahme 5 ist mit einer Schiebeführung 8 verbunden, in der ein Anschlusselement 6 linear bewegbar angeordnet ist. Das Anschlusselement 6 dient zur Verbindung einer elektrischen Anordnung, d.h. vorliegend einer Ladesteuerung 14, mit dem Fahrzeug 2 und ist als zylindrischer Steckverbinder ausgeführt. Die Ladesteuerung 14 dient vorliegend zur Bereitstellung eines elektrischen Ladestroms von ca. 20 A als auch zur Steuerung des Ladevorgangs und weist daher einen Microcontroller mit einer entsprechenden Programmierung auf. Das Anschlusselement 6 wird von einem Elektromotor 30 angetrieben, der zur Steuerung mit der Ladesteuerung 14 verbunden ist.

An der Stirnseite des Anschlusselements 6 befindet sich ein zweites Kontaktelement 11, das korrespondierend zu einem am Elektrofahrzeug 2 angeordneten ersten Kontaktelement 10 ausgebildet ist, um eine elektrische Verbindung zwischen Fahrzeug 2 und Ladesteuerung 14 herzustellen. Ferner dient das zweite Kontaktelement 11 des Anschlusselementes 6 vorliegend auch als erstes Verriegelungsmittel zur Verriegelung des Moduls 3 mit dem Fahrzeug 2, wie nachfolgend erläutert. Die modulseitige Ladesteuerung 14 ist mit dem Anschlusselement 6 und somit mit dem zweiten Kontaktelement 11 über ein flexibles Anschlusskabel 12 verbunden.

Die in Figur 2 in einer Schnittansicht dargestellte fahrzeugseitige Schnittstelle 4 weist, wie bereits eingangs diskutiert, das erste Kontaktelement 10 auf. Dieses ist, wie gezeigt, in einer sacklochartigen Vertiefung 9 angeordnet, die mit dem modulseitigen Kontaktelement 11 in Eingriff kommt und somit als Verriegelungsmittel dient.

Zur Verbindung des Fahrzeuges 2 mit der Ladesäule 3 wird die Schnittstelle 4 in Pfeilrichtung gemäß Fig. 2 in die konische Aufnahme 5 eingeschoben. Wie in Fig. 2 gezeigt, befindet sich das Anschlusselement 6 in einer freien Position, so dass die Schnittstelle in die Aufnahme 5 eingeschoben werden kann.

Sobald die Schnittstelle 4 ihre Endposition in der Aufnahme 5 erreicht hat, aktiviert die Ladesteuerung 14 den Elektromotor 30 und betätigt somit das Anschlusselement 6. Hierzu ist an der Aufnahme 5 ein Mikroschalter vorgesehen (nicht gezeigt), welcher der Ladesteuerung 14 ein mit der Ladesäule 3 zu verbindendes Fahrzeug 2 signalisiert. Alternativ zum Mikroschalter kann auch ein optischer Sensor oder ein Hallsensor verwendet werden.

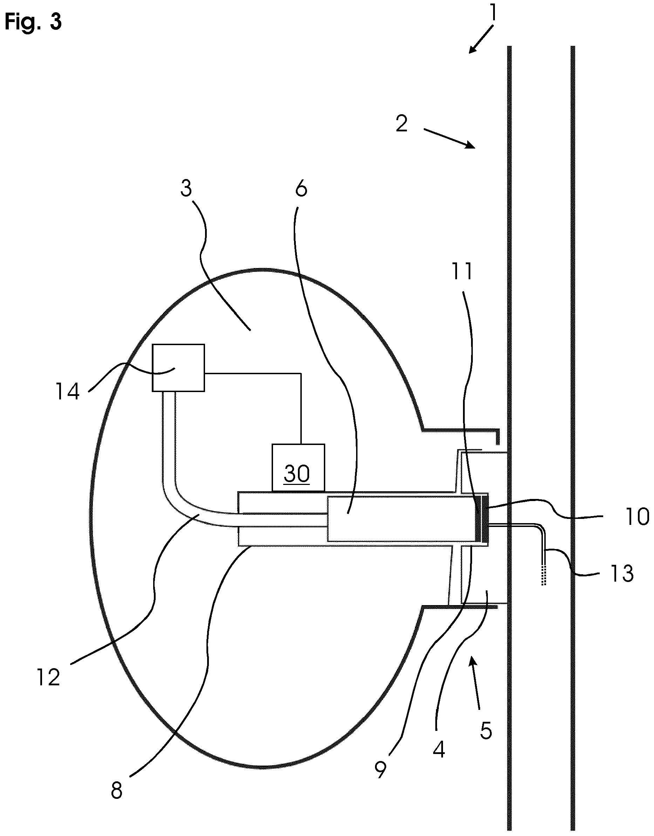

Das Anschlusselement 6 wird entsprechend in eine Verriegelungsposition gebracht, die in einer weiteren schematischen Schnittansicht in Fig. 3 gezeigt ist.

Das Elektrofahrzeug 2 ist hier, wie in Fig. 3 gezeigt, mit der Schnittstelle 4 in die Aufnahme 5 eingeschoben. Das Anschlusselement 6 befindet sich in der Verriegelungsposition, in der das erste Kontaktelement 10 mit dem zweiten Kontaktelement 11 verbunden ist und so eine elektrische Verbindung zwischen Ladesteuerung 14 und dem Leistungsbordnetz 13 herstellt. Ferner ist das modulseitige zweite Kontaktelement 11 mit der fahrzeugseitigen Vertiefung 9 in Eingriff, wodurch Fahrzeug 2 und Ladesäule 3 mechanisch verriegelt sind, d.h. das Fahrzeug 2 ist an der stationären Ladesäule 3 gegen unberechtigtes Entfernen bzw. Diebstahl gesichert. Somit wird vorteilhaft gleichzeitig eine elektrische Verbindung und eine mechanische Verriegelung erreicht.

Um Fahrzeug 2 und Ladesäule 3 zu entriegeln, aktiviert die Ladesteuerung 14 den Elektromotor 30 erneut. Hierzu kann bspw. ein Bedienelement (nicht gezeigt) an der Ladesäule 3 vorgesehen sein, so dass eine Entriegelung nur nach Eingabe eines vordefinierten PIN-Code durch den Benutzer erfolgt. Gerade falls die vorliegende Ladesäule 3 im öffentlichen Bereich aufgestellt ist, kann eine derartige Sicherung zweckmäßig sein.

Die Kontaktelemente 10, 11 können zusätzlich dazu ausgelegt sein, eine Datenkommunikation zwischen dem Fahrzeug 2 und der Ladesäule 3 herzustellen. Bevorzugt sind die Kontaktelemente 10, 11 als Stecker und Buchse mit jeweils 2-6 elektrischen Kontakten ausgeführt.

Fig. 4 zeigt ein zweites Ausführungsbeispiel eines modularen Fahrzeugsystems 1' in einer schematischen Ansicht anhand der Verbindung eines Elektrofahrzeugs 2' mit einem weiteren Modul, vorliegend einem Ladegerät 17. Aus Gründen der Übersicht ist das Fahrzeug 2' in Fig. 4 lediglich angedeutet dargestellt. Das vorliegende Ausführungsbeispiel entspricht weitgehend dem mit Bezug auf die Figuren 1-3 erläuterten Ausführungsbeispiel, daher werden entsprechend korrespondierende Elemente mit gleichen Bezugszeichen bezeichnet.

Wie sich Fig. 4 entnehmen lässt, ist auch vorliegend die Schnittstelle 4' als Steckverbinder ausgebildet. Die Schnittstelle 4' ist mit einem geeigneten Kabel 18 mit dem Leistungsbordnetz (in Fig. 4 nicht gezeigt) des Fahrzeugs 1 verbunden. Das Kabel 18 ist integral mit einer metallischen Armierung bzw. einem Stahlkabel versehen, um einen unberechtigten Eingriff zu verhindern.

Das Ladegerät 17 weist ein als Buchse ausgeführtes Anschlusselement 6' auf, in der die steckerförmige Schnittstelle 4' wie gezeigt einsteckbar ist. Die Schnittstelle 4' ist als zylinderförmiger Bolzen ausgeführt und weist eine ringförmig ausgebildete Nut 19 auf, die zur Verriegelung von Fahrzeug 2' und Ladegerät 17 mit einem Riegel 22 in Eingriff kommt, was in Fig. 4 gezeigt ist.

Wie zuvor mit Bezug auf die Fig. 1-3 erläutert, weist die Schnittstelle 4' ein erstes Kontaktelement 10' und das Anschlusselement 6' ein zweites Kontaktelement 11' auf, um das Leistungsbordnetz (in Fig. 4 nicht gezeigt) mit der Ladesteuerung 14 elektrisch zu verbinden.

Weiter ist am Anschlusselement 6' ein bolzenförmiger Riegel 22 angeordnet. Der Riegel 22 ist über einen Elektromotor 30 in einer Schiebeführung 23 linear bewegbar. In der gezeigten Verriegelungsposition greift der Riegel 22 in die ringförmige Nut 19 der Schnittstelle 4' ein und verhindert ein Herausziehen oder Lösen der Schnittstelle 4' von dem Anschlusselement 6'.

Das Verbinden des Fahrzeugs 2' mit dem Ladegerät 17 erfolgt, wie mit Bezug auf die Fig. 1-3 erläutert. In der Ausgangslage befindet sich der Riegel 22 in einer freien Position (in Fig. 4 nicht gezeigt), in der die Schnittstelle 4' in das buchsenförmige Anschlusselement 6' eingesteckt werden kann. Die Ladesteuerung 14 erkennt die eingesteckte Schnittstelle 4' und betätigt den Elektromotor 30, welcher den Riegel 22 in die in Fig. 4 gezeigte Verriegelungsposition schiebt. Das Fahrzeug 1' ist somit elektrisch mit dem Ladegerät 17 verbunden und ebenfalls mechanisch mit diesem verriegelt.

Ist das Fahrzeug 2' nicht mit einem entsprechenden Modul, wie einem Ladegerät 17, verbunden, kann die Schnittstelle 4' in einer zusätzlichen Haltevorrichtung 15 am Fahrzeug 2' befestigt sein, wie in den schematischen Abbildungen der Fig. 5a und 5b gezeigt.

Wie in der Figur 5b dargestellt, ist die Schnittstelle 4' ist in eine buchsenförmige Aufnahme 29 eingesteckt. Weiter angeordnet an der Haltevorrichtung 15 ist ein Riegelbolzen 16, der mit Hilfe eines Drehzylinderschlosses 31 in die ringförmige Nut 19 ein- bzw. ausgeschoben werden kann.

Nach Entriegelung des Riegelbolzens 16 mittels des gezeigten Drehzylinderschlosses 31 kann die Schnittstelle 4' aus der Aufnahme 29 herausgezogen werden. Durch das flexible Verbindungsmittel 18 kann die Schnittstelle 4' auf besonders einfacher Weise, beispielsweise mit einem Anschlusselement eines Moduls (hier nicht dargestellt), wie zuvor erläutert, verbunden und verriegelt werden. Zusätzlich kann die Anordnung aus Schnittstelle 4' und Kabel 18 durch die Anordnung der Haltevorrichtung 15 am Fahrzeug 2' ferner zum Anschließen des Elektrofahrrads 2', am beispielsweise einem Fahrradständer oder einem Laternenpfahl, verwendet werden.

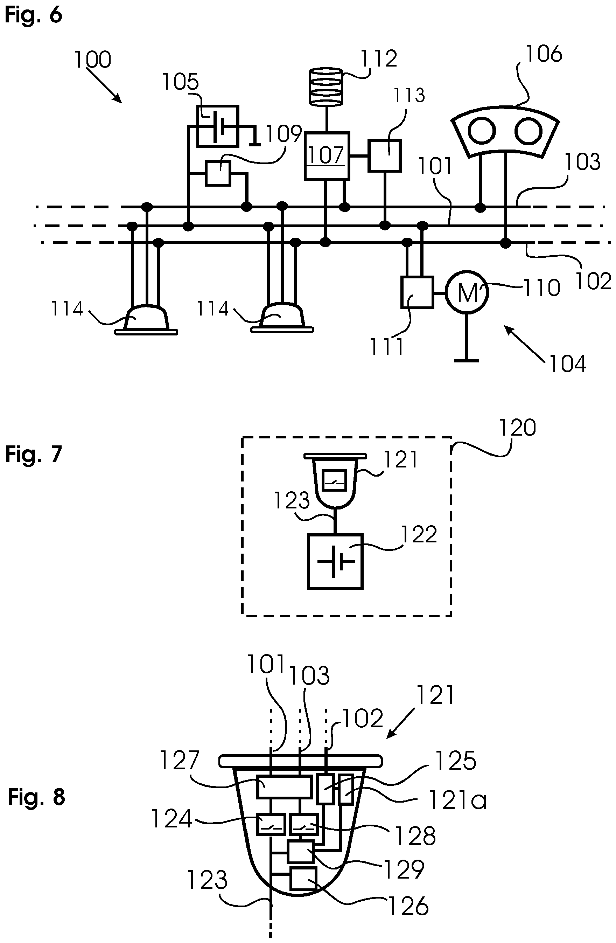

Die vorstehend erläuterten Ausführungsbeispiele des modularen Fahrzeugsystems können ergänzend in Kombination mit einer Kompatibilitätsprüfung eingesetzt werden, wie mit Bezug auf die Fig. 6-10 nachfolgend erläutert.

Fig. 6 zeigt das elektrische System 100 eines modularen Fahrzeugsystems 1, vorliegend ein Elektrofahrrad, in einer schematischen Ansicht. Zur Übersicht sind hierbei die weiteren insbesondere mechanischen Bauteile des Elektrofahrrades, wie bspw. Rahmen und Räder, nicht dargestellt. Ferner sind sämtliche Bauteile hinsichtlich ihrer mechanischen Ausgestaltung nur schematisch gezeigt, um zu zeigen, dass die nachfolgend erläuterte Kompatibilitätsprüfung mit sämtlichen zuvor erläuterten Ausführungsbeispielen vorteilhaft eingesetzt werden kann.

Wie sich Fig. 6 entnehmen lässt, weist das elektrische System 100 insgesamt drei Bordnetzsysteme auf, nämlich ein Leistungsbordnetz 101, ein CAN-Bussystem 102 und ein Hilfsbordnetz 103. Das Leistungsbordnetz 101 dient hierbei vorwiegend der elektrischen Energieversorgung einer elektrischen Antriebseinheit 104 des Fahrzeugs. Das Leistungsbordnetz 101 ist als Gleichstromnetz mit einer Betriebsspannung von 42 V DC für einen Strom von ca. 20 A - 100 A ausgelegt. Das Leistungsbordnetz 101 wird von einer internen, wiederaufladbaren Fahrzeugbatterie 105 mit elektrischer Energie versorgt.

Das Hilfsbordnetz 103 ist für eine Betriebsspannung von 12 V Gleichstrom ausgelegt und dient der Energieversorgung weiterer Fahrzeugkomponenten, wie bspw. einer Bedieneinheit 106 und einer Steuerungseinrichtung 107. Hierbei wird das Hilfsbordnetz 103 über die Batterie 105 und einen zwischengeschalteten 42V/12V Konverter 109 mit elektrischer Energie versorgt.

Das CAN-Bussystem 102 dient der Steuerung und der Kommunikation der Fahrzeugkomponenten, wie nachfolgend detailliert erläutert. Das CAN-Bussystem 102 ist vorliegend mit elektrischen Signalleitungen ausgebildet; das Kommunikationsprotokoll entspricht dem "CAN-open"-Protokoll gemäß Spezifikation CiA 454 (LEV).

Die elektrische Antriebseinheit 104 umfasst einen Elektromotor 110, welcher über eine Motorsteuerung 111 mit dem Leistungsbordnetz 101 verbunden ist. Die Motorsteuerung 111 ist zum Empfang von Steuerungsbefehlen ferner mit dem CAN-Bus 102 verbunden und moduliert die dem Motor zugeführte Spannung aus dem Leistungsbordnetz 101 mittels einer Pulsweitenmodulation (PWM), um eine Regelung der Antriebsleistung zu ermöglichen.

Zur Steuerung des Elektrofahrzeugs ist die bereits erwähnte zentrale Steuerungseinrichtung 107 vorgesehen, die entsprechend mit dem CAN-Bus 102 und zur Spannungsversorgung ferner mit dem Hilfsbordnetz 103 verbunden ist. Die Steuerungseinrichtung 107 ist eine Mikroprozessorsteuerung, welche über ein in einer verbundenen und variablen Speichereinheit 112 abgelegtes Programm gesteuert wird. Hierbei dient die Steuerungseinheit 107 bspw. dazu, die Motorsteuerung 111 für den Fahrbetrieb entsprechend eines über die Bedieneinheit 106 eingegebenen Steuerungsbefehls des Fahrzeugbenutzers anzusteuern.

Die Steuerungseinheit 107 überwacht ferner das Leistungsbordnetz 101 und ist hierzu mit einer Messeinheit 113 verbunden, welche Spannung und Strom auf dem Leistungsbordnetz erfasst und entsprechende digitale Messwerte an die Steuerungseinrichtung 107 liefert. Die Speichereinheit 112 weist Kompatibilitätsparameter in einer Datenbank auf, was nachfolgend im Detail erläutert ist.

Das elektrische System 100 des Elektrofahrzeuges weist ferner zwei Schnittstellen 114 auf, die als Steckverbinder zur Verbindung mit entsprechenden Modulen 120 ausgebildet sind und das Leistungsbordnetz 101, das Hilfsbordnetz 103 und das Kommunikationsnetz 102 entsprechend mit an den Schnittstellen 114 angeschlossenen Modulen 120 trennbar verbindet.

Das elektrische System 100 des Elektrofahrzeugs und insbesondere die Bordnetze 101, 102 und 103 können naturgemäß weitere Baugruppen und Komponenten aufweisen bzw. verbinden, wie durch die gestrichelten Linien angedeutet.

Ein Ausführungsbeispiel eines zur Verbindung mit einer Schnittstelle 114 vorgesehenen Moduls 120 ist in einer schematischen Ansicht in Fig. 7 gezeigt. Das Modul 120 weist ein Anschlusselement 121 auf, welches vorliegend als Buchse zum Eingriff mit einer der Schnittstellen 114 ausgebildet ist.

Das Modul 120 weist ferner eine elektrische Anordnung, nämlich eine 42V-Batterie 122 auf, welche zur Zufuhr von elektrischer Energie in das Leistungsbordnetz 101 über eine Versorgungsleitung 123 mit dem Anschlusselement 121 verbunden ist. Alternativ kann das Modul 120 insbesondere als Ladesäule 3 oder Ladegerät 17, wie in Figur 2-4 gezeigt, ausgebildet sein.

Schnittstelle 114 und Anschlusselement 121 können mechanisch bspw. den zuvor mit Bezug auf die Figuren 1-4 erläuterten Ausführungsbeispielen entsprechen. Insbesondere kann das Anschlusselement 121 einen elektromotorisch angetriebenen Riegel (in Fig. 7 nicht gezeigt) aufweisen, der in eine in der Schnittstelle 114 angeordneten Ringnut (in Fig. 7 nicht gezeigt) zur Verriegelung eingreift.

Eine schematische Ansicht des Anschlusselements 121 in Fig. 8 gezeigt. Wie sich Fig. 8 entnehmen lässt, weist das Anschlusselement 121 insgesamt drei Kontaktelemente auf, um das Modul 120 mit dem Leistungsbordnetz 101, dem CAN-Bussystem 102 und dem Hilfsbordnetz 103 zu verbinden.

Das Anschlusselement 121 ist integriert mit einer ersten Schalteinheit 124 ausgebildet, mit der die Verbindung zwischen der Versorgungsleitung 123 und folglich der Batterie 122 mit dem Leistungsbordnetz 101 geschaltet werden kann. Zusätzlich verbindet die Schalteinheit 128 einen 42V/12V Konverter 129 schaltbar mit dem Hilfsbordnetz 103, um bspw. im Störungsfall das elektrische Hilfsbordnetz 103 des Fahrzeugs mit elektrischer Energie zu versorgen. Die Schalteinheiten 124 und 128 sind vorliegend mit MOSFET-Schaltern ausgebildet und werden über eine Mikroprozessor-Modulsteuerung 125 gesteuert, die mit dem CAN-Bussystem 102 verbunden ist. Die Modulsteuerung 125 wird über den Konverter 129 und somit durch die Batterie 122 des Moduls 120 mit elektrischer Energie versorgt.

Ein Messfühler 126 ist vorgesehen, um die Spannung auf der Versorgungsleitung 123 und somit die durch die Batterie 122 bereitgestellte Spannung zu messen und einen entsprechenden Messwert an die Modulsteuerung 125 zu liefern.

Ferner ist eine Überwachungseinheit 127 vorgesehen, welche den maximal zulässigen Strom zwischen Modul 120 und Leistungsbordnetz 101 sowie zwischen Modul 120 und Hilfsbordnetz 103 sowie die maximal zulässigen Spannungen überwacht, so dass bspw. im Falle eines Kurzschlusses die Batterie 122 sicher vom elektrischen System 100 des Fahrzeugs getrennt werden kann. Hierzu übermittelt die Überwachungseinheit 127 regelmäßig entsprechende Messwerte an die Modulsteuerung 125, welche entsprechend die Schalteinheiten 124 und 128 betätigt.

Im vorliegenden Beispiel sollte ein Strom von 100 A zwischen Versorgungsleitung 123 und Leistungsbordnetz 101 bzw. von 20 A zwischen Konverter 129 und Hilfsbordnetz 103 nicht überschritten werden.

Die Überwachungseinheit 127, die Schalteinheiten 124, 128 und der Messfühler 126 sind naturgemäß mit der Modulsteuerung 125 über geeignete Kommunikationsleitungen verbunden (nicht gezeigt).

Zusätzlich ist ein Elektromotor 121a vorgesehen, der den zuvor beschriebenen Riegel (nicht gezeigt) antreibt. Der Elektromotor 121a wird von der Modulsteuerung 125 angesteuert und über den Konverter 129 mit elektrischer Energie versorgt.

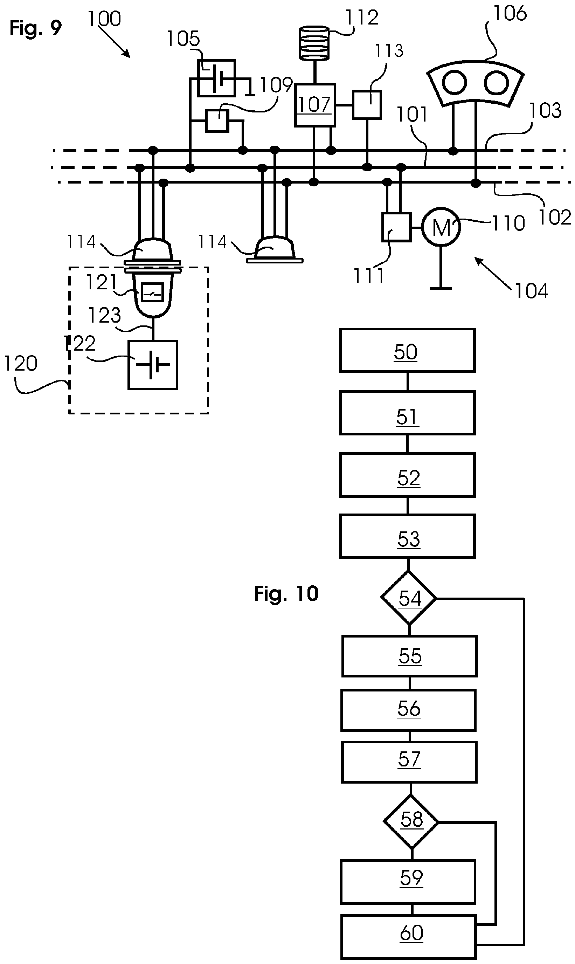

Ein Ausführungsbeispiel des elektrischen Systems 100 des modularen Fahrzeugs mit verbundenem Modul 120 ist in Fig. 9 gezeigt. Der Anschluss einer zusätzlichen Batterie 122 kann bspw. dann notwendig werden, wenn die interne Fahrzeugbatterie 105 erschöpft ist oder die Reichweite des Fahrzeugs erhöht werden soll. Der Benutzer schließt hierzu das Modul 120 an die Schnittstelle 114 an, wonach Steuerungseinrichtung 107 und Modulsteuerung 125 in einem Kompatibilitätsmodus miteinander über den CAN-Bus 102 kommunizieren, um zum einen die Berechtigung für den Anschluss des Moduls 120 zu prüfen und zum Anderen die Kompatibilität des Moduls 120 und genauer der Batterie 122 des Moduls 120 vor einer Verbindung und einem Verriegeln dieser mit dem Leistungsbordnetz 101 zu prüfen.

Das Verfahren beim Verbinden des Moduls 120 mit der Schnittstelle 114 wird nachfolgend mit Bezug auf das Ausführungsbeispiel gemäß Fig. 10 erläutert, welches die einzelnen Schritte anhand eines Flussdiagramms darstellt.

Gemäß Schritt 50 wird zunächst das Anschlusselement 121 des Moduls 120 mit einer der Schnittstellen 114 durch einen Benutzer, wie in Fig. 9 dargestellt, verbunden. Die Schalteinheiten 124 und 128 sind in diesem Zustand zunächst geöffnet, so dass die Batterie 122 nicht mit dem Leistungsbordnetz 101 verbunden ist. Allerdings sorgt das Anschlusselement 121 für eine Verbindung der Überwachungseinheit 127 mit dem Hilfsbordnetz 103 und dem Leistungsbordnetz 101.

Sobald die Überwachungseinheit 127 eine Spannung auf dem Hilfsbordnetz 103 bzw. dem Leistungsbordnetz 101 feststellt, gibt diese ein Signal an die Modulsteuerung 125, welche in Schritt 51 den Messfühler 126 hinsichtlich der derzeitigen Batteriespannung auf der Versorgungsleitung 123 abfragt.

Ferner ermittelt die Modulsteuerung 125 parallel aus einem internen Speicher mehrere Identifikationsparameter, welche das Modul 120 hinsichtlich Typ und Hersteller charakterisieren. In Schritt 52 sendet die Modulsteuerung 125 ein Identifikationssignal an die Steuerungseinrichtung 107 über das CAN-Bussystem 102. Das Identifikationssignal enthält im vorliegenden Beispiel die nachfolgende Information:

| | |
|---|---|
| Hersteller-ID: | 005 |
| Typen-ID: | 125 |
| Batterie-Spannung: | 42,5 V |

Hierbei entspricht die Hersteller-ID einem bestimmten, entsprechend der ID zugeordneten Hersteller des Moduls. Die Typen-ID entspricht der Funktionalität "Energiequelle - Batterie".

Die Steuerungseinrichtung 107 empfängt das Identifikationssignal in Schritt 53 und fragt die Kompatibilitätsparameter des Fahrzeugs aus der in der Speichereinheit 112 abgelegten Datenbank ab. Im vorliegenden Beispiel umfasst die Datenbank die folgenden Parameter:

| | |
|---|---|
| Erlaubte Hersteller: | 002-008, 057, 062, 118-255 |
| Erlaubte Modultypen: | 014-042,48,87,125, 144 |
| max. Spannung Leistungsbordnetz: | 43,8 V |
| min. Spannung Leistungsbordnetz: | 30,0 V |

Die Steuerungseinrichtung 107 vergleicht in Schritt 54 zunächst die im Identifikationssignal erhaltenen Parameter mit dem aus der Datenbank erhaltenen Kompatibilitätsparameter. Wie aus den vorstehenden Tabellen folgt, ist das Modul 120 grundsätzlich mit dem Fahrzeug kompatibel und zum Anschluss berechtigt. Die Steuerungseinrichtung 107 sendet gemäß Schritt 55 ein Aktivierungssignal an die Modulsteuerung 125, welche den Elektromotor 121a in Schritt 56 ansteuert und das Modul 120 an dem Fahrzeug verriegelt. Entsprechend Schritt 57 fragt die Steuerungseinrichtung 107 anschließend die Messeinrichtung 113 hinsichtlich der aktuellen Spannung des Leistungsbordnetzes 101 ab.

Die Abfrage der Messeinrichtung in Schritt 57 ist erforderlich, da das Fahrzeug auch eine interne Fahrzeugbatterie 105 aufweist und die Spannung der Batterie 122 sich daher nur unwesentlich von der Spannung der Batterie 105 unterscheiden sollte. Im vorliegenden Beispiel beträgt die Spannung auf dem Leistungsbordnetz 101 42,5 V.

Die Steuerungseinrichtung 107 vergleicht diesen Wert mit der Batterie-Spannung aus dem Identifikationssignal in Schritt 58 und prüft, ob die Batterie-Spannung des Moduls 120 um nicht mehr als ± 0,05 V von der Spannung des Leistungsbordnetzes 101 abweicht.

Da dies im vorliegenden Beispiel der Fall ist, sendet die Steuerungseinrichtung 107 in Schritt 59 ein zweites Aktivierungssignal an die mit der Modulsteuerung 125 verbundene Schalteinheit 124, worauf die Versorgungsleitung 123 und somit die Batterie 122 mit dem Leistungsbordnetz 101 verbunden wird. Die Kompatibilitätsprüfung endet in Schritt 60.

Die erfolgreiche Verbindung wird dem Benutzer durch eine grüne Indikatorlampe (nicht gezeigt), wie bspw. einer LED angezeigt, die im Anschlusselement 121 angeordnet ist. Andernfalls zeigt eine rote Indikatorlampe (nicht gezeigt) im Anschlusselement 121, dass eine Verbindung des Moduls 120 mit dem Fahrzeug aufgrund mangelnder Kompatibilität nicht möglich ist. In diesem Falle wird der Elektromotor 121a nochmals betätigt, um Modul 121 von der Schnittstelle 114 zu entriegeln.

Während des Betriebs bleibt die Überwachungseinheit 127 aktiv. Sollten die vorgegebenen Maximalwerte für Strom bzw. Spannung überschritten werden, sendet die Überwachungseinheit 127 ein Signal an die Modulsteuerung 125, so dass die Schalteinheit 124 die Verbindung zwischen Batterie 122 und elektrischem System 1 des Fahrzeugs trennt, um Beschädigungen zu vermeiden.

Naturgemäß ist die vorliegende Erfindung nicht auf Anwendungsfälle beschränkt, bei welchen ein Modul 120 mit dem Fahrzeug 2, 2' verbunden wird. Auch die Verbindung eines ersten Moduls, bspw. einer Ladestation bzw. Ladeeinheit und eines zweiten Moduls bspw. eines wiederaufladbaren Moduls mit Akku ist denkbar.

Die zuvor erläuterten Ausführungsbeispiele erlauben zahlreiche Änderungen oder Ergänzungen. Beispielsweise ist es denkbar, dass
- die Steuerungseinheit 107 mit der Bedieneinheit 106 und/oder der Motorsteuerung 111 integriert ausgebildet ist,
- die Schalteinheit 124 fahrzeugseitig bzw. auf der Seite einer Ladeeinheit ausgebildet ist,
- die Schalteinheit 124 integriert mit der Schnittstelle 114 ausgebildet ist,
- nur eine oder mehr als zwei Schnittstellen 114 zur Verbindung mit entsprechenden Modulen 120 im elektrischen System 100 des Fahrzeugs bzw. in einer Ladeeinheit angeordnet sind,
- die interne Fahrzeugbatterie 105 über ein Anschlusselement 121 mit einer der Schnittstellen 114 trennbar verbunden ist,
- das CAN-Bussystem 102 ergänzend oder alternativ zu den gezeigten elektrischen Signalleitungen optische Signalleitungen umfasst,
- die Indikatorlampen anstelle in dem Anschlusselement 121 fahrzeugseitig bzw. in einer Ladeeinheit angeordnet sind und/oder
- die Schalteinheit 124 zum getrennten Schalten einer Speiseleitung und einer Ladeleitung ausgebildet ist, die zwischen Modul 120 und Leistungsbordnetz 101 vorgesehen sind.
- das Modul (3,17,120) als passive Komponente, d.h. bspw. als Verlängerungs- oder Überbrückungskabel, ausgelegt ist, und neben einem Anschlusselement (6, 6', 121) einen weiteren Steckverbinder bzw. eine Schnittstelle (4,4',114) zum Verbinden mit einem weiteren Modul aufweist.

## Patentansprüche

1. Modulares Fahrzeugsystem (1), mit
- einem Elektrofahrzeug (2, 2'), insbesondere Elektroleichtfahrzeug, mit mindestens
- einem Leistungsbordnetz (13, 101) zur Energieversorgung einer elektrischen Antriebseinheit (104),
- einer Steuerungseinrichtung (107),
- einer mit dem Leistungsbordnetz (13, 101) verbundenen Schnittstelle (4, 4', 114) zur Verbindung mindestens eines Moduls (3, 17, 120) und
- ein an der Schnittstelle (4, 4', 114) angeordnetes erstes Verriegelungsmittel (9, 19) und
- einem Modul (3, 17, 120) , mit
- einer elektrischen Anordnung,
- einer Modulsteuerung (14, 125), die zur Kommunikation mit der Steuerungseinrichtung (107) ausgebildet und mit einem elektrisch betätigbaren Verriegelungsantrieb (30, 121a) verbunden ist,
- einem mit der Schnittstelle (4, 4', 114) trennbar verbindbaren Anschlusselement (6, 6', 121), zur Verbindung der elektrischen Anordnung mit dem Leistungsbordnetz (13, 101), und
- einem an dem Anschlusselement (6, 6', 121) angeordnetem zweiten Verriegelungsmittel (11, 22), das zum Eingriff mit dem ersten Verriegelungsmittel (9, 19) ausgebildet ist, wobei
- der Verriegelungsantrieb (30, 121a) an mindestens einem der Verriegelungsmittel (9, 11, 19, 22) angeordnet ist, um mindestens eines der Verriegelungsmittel (9, 11, 19, 22) zwischen einer freien Position und einer Verriegelungsposition zu bewegen,
- in der freien Position das Anschlusselement (6, 6', 121) von der Schnittstelle (4, 4', 114) trennbar ist und in der Verriegelungsposition das Anschlusselement (6, 6', 121) mit der Schnittstelle (4, 4', 114) mechanisch verriegelt ist,
- die Modulsteuerung (14, 125) ferner ausgebildet ist, um beim Verbinden des Anschlusselements (6, 6', 121) mit der Schnittstelle (4, 4', 114) ein Identifikationssignal an die Steuerungseinrichtung (107) zu senden und
- die Steuerungseinrichtung (107) ausgebildet ist, um das Identifikationssignal zu empfangen, mit mindestens einem Kompatibilitätsparameter zu vergleichen und im Falle, dass das Identifikationssignal mit dem Kompatibilitätsparameter übereinstimmt, ein Aktivierungssignal an den mindestens einen Verriegelungsantrieb (30, 121a) zu senden, um das Anschlusselement (6, 6', 121) mit der Schnittstelle (4, 4', 114) zu verriegeln.

2. Modulares Fahrzeugsystem nach Anspruch 1, wobei das zweite Verriegelungsmittel (11, 22) zwischen der freien Position und der Verriegelungsposition bewegbar ist.

3. Modulares Fahrzeugsystem nach einem der vorangehenden Ansprüche, wobei der Verriegelungsantrieb (30, 121a) an dem mindestens einen Anschlusselement (6, 6', 121) angeordnet ist.

4. Modulares Fahrzeugsystem nach Anspruch 1, wobei die Steuerungseinrichtung (107) ferner ausgebildet ist, um ein Deaktivierungssignal an den mindestens einen Verriegelungsantrieb (30, 121a) zu senden und das Anschlusselement (6, 6', 121) und die Schnittstelle (4, 4', 114) zu entriegeln.

5. Modulares Fahrzeugsystem nach einem der vorangehenden Ansprüche, wobei die Schnittstelle (4, 4', 114) und/oder das Anschlusselement (6, 6', 121) als Steckverbinder ausgebildet ist.

6. Modulares Fahrzeugsystem nach einem der vorangehenden Ansprüche, wobei zwischen der Schnittstelle (4, 4', 114) und dem Elektrofahrzeug (2, 2') und/oder dem Anschlusselement (6, 6', 121) und dem Modul ein flexibles Verbindungsmittel (18) angeordnet ist.

7. Modulares Fahrzeugsystem nach einem der vorangehenden Ansprüche, wobei das erste oder das zweite Verriegelungsmittel (9, 11) als Verriegelungsbolzen (22) ausgebildet ist.

8. Modulares Fahrzeugsystem nach Anspruch 7, wobei das zweite oder erste Verriegelungsmittel (9, 11) als Aufnahme (19) für den Verriegelungsbolzen (22) ausgebildet ist.

9. Modulares Fahrzeugsystem nach einem der vorangehenden Ansprüche, wobei eine magnetische Fixierung vorgesehen ist, um die Schnittstelle (4, 4', 114) und das Anschlusselement (6, 6', 121) aneinander zu fixieren und/oder zu positionieren.

10. Elektrofahrzeug, insbesondere Elektroleichtfahrzeug, mit mindestens
- einem Leistungsbordnetz (13, 101) zur Energieversorgung einer elektrischen Antriebseinheit (104),
- einer Steuerungseinrichtung (107) zur Kommunikation mit einer Modulsteuerung (14, 125) eines Moduls (3, 17, 120),
- einer mit dem Leistungsbordnetz (13, 101) verbundenen Schnittstelle (4, 4', 114) zur Verbindung mit einem Anschlusselement (6, 6', 121) des Moduls (3, 17, 120), und
- ein an der Schnittstelle (4, 4', 114) angeordnetes erstes Verriegelungsmittel (9, 19), das zum Eingriff mit einem an dem Anschlusselement (6, 6', 121) angeordneten zweiten Verriegelungsmittel (11, 22) ausgebildet ist, wobei
- an dem ersten Verriegelungsmittel (9, 19) ein elektrisch betätigbarer Verriegelungsantrieb (30, 121a) angeordnet ist, um dieses zwischen einer freien Position und einer Verriegelungsposition zu bewegen,
- in der freien Position das Anschlusselement (6, 6', 121) von der Schnittstelle (4, 4', 114) trennbar ist und in der Verriegelungsposition das Anschlusselement (6, 6', 121) mit der Schnittstelle (4, 4', 114) mechanisch verriegelt ist und
- die Steuerungseinrichtung (107) ausgebildet ist, um ein Identifikationssignal von der Modulsteuerung (14, 125) zu empfangen, mit mindestens einem Kompatibilitätsparameter zu vergleichen und im Falle, dass das Identifikationssignal mit dem Kompatibilitätsparameter übereinstimmt, ein Aktivierungssignal an den mindestens einen Verriegelungsantrieb (30, 121a) zu senden, um das Anschlusselement (6, 6', 121) mit der Schnittstelle (4, 4', 114) zu verriegeln.

11. Modul zur Verbindung mit einem Elektrofahrzeug (2, 2'), insbesondere Elektroleichtfahrzeug, mit mindestens
- einer elektrischen Anordnung zur Verbindung mit einem Leistungsbordnetz (13, 101) des Elektrofahrzeugs (2, 2'),
- einer Modulsteuerung (14, 125), die zur Kommunikation mit einer Steuerungseinrichtung (107) des Elektrofahrzeugs (2, 2') ausgebildet und mit einem elektrisch betätigbaren Verriegelungsantrieb (30, 121a) verbunden ist,
- einem mit einer Schnittstelle (4, 4', 114) des Elektrofahrzeugs trennbar verbindbaren Anschlusselement (6, 6', 121) und
- einem an dem Anschlusselement (6, 6', 121) angeordnetem zweiten Verriegelungsmittel (11, 22), das zum Eingriff mit einem an der Schnittstelle (4, 4', 114) angeordnetem ersten Verriegelungsmittel (9, 19) ausgebildet ist, wobei
- der Verriegelungsantrieb (30, 121a) an dem zweiten Verriegelungsmittel (11, 22) angeordnet ist, um dieses zwischen einer freien Position und einer Verriegelungsposition zu bewegen, wobei
- in der freien Position das Anschlusselement (6, 6', 121) von der Schnittstelle (4, 4', 114) trennbar ist und in der Verriegelungsposition das Anschlusselement (6, 6', 121) mit der Schnittstelle (4, 4', 114) mechanisch verriegelt ist und
- die Modulsteuerung (14, 125) ferner ausgebildet ist, um beim Verbinden des Anschlusselements (6, 6', 121) mit der Schnittstelle (4, 4', 114) ein Identifikationssignal an die Steuerungseinrichtung (107) zu senden.

12. Verfahren zum Verbinden eines Elektrofahrzeuges (2, 2'), insbesondere eines Elektroleichtfahrzeugs mit einem Modul (3, 17, 120), wobei das Elektrofahrzeug (2, 2') mindestens ein Leistungsbordnetz (13, 101), eine Steuerungseinrichtung (107), eine mit dem Leistungsbordnetz (13, 101) verbundene Schnittstelle (4, 4', 114) und ein an der Schnittstelle (4, 4', 114) angeordnetes erstes Verriegelungsmittel (9, 19) aufweist, und das Modul (3, 17, 120) mindestens eine Modulsteuerung (14, 125), ein mit der Schnittstelle (4, 4', 114) trennbar verbindbares Anschlusselement (6, 6', 121) und ein am Anschlusselement (6, 6', 121) angeordnetes zweites Verriegelungsmittel (11, 22) aufweist, welches zum Eingriff mit dem ersten Verriegelungsmittel (9,19) ausgebildet ist, wobei
- die Modulsteuerung (14, 125) beim Verbinden des Anschlusselements (6, 6', 121) mit der Schnittstelle (4, 4', 114) ein Identifikationssignal an die Steuerungseinrichtung (107) sendet und
- die Steuerungseinrichtung (107) das Identifikationssignal empfängt, mit mindestens einem Kompatibilitätsparameter vergleicht und im Falle, dass das Identifikationssignal mit dem Kompatibilitätsparameter übereinstimmt, ein Aktivierungssignal an mindestens einen Verriegelungsantrieb (30, 121a) sendet, um
- das erste und/oder das zweite Verriegelungsmittel (9,11,19, 22) von einer freien Position in eine Verriegelungsposition zu bringen und um das Anschlusselement (6, 6', 121) an der Schnittstelle (4, 4', 114) zu verriegeln.

## Claims

1. Modular vehicle system (1), with
- an electric vehicle (2, 2'), particularly a light electric vehicle, with at least
- an on-board power supply system (13, 101) for energy supply of an electric drive unit (104),
- a control device (107),
- an interface (4, 4', 114), connected to the on-board power supply system (13, 101) for connection of at least one module (3, 17, 120), and
- a first locking means (9, 19) arranged at the interface (4, 4', 114); and
- a module (3, 17, 120), with
- an electric arrangement,
- a module control (14, 125), which is configured to communicate with the control device (107) and which is connected to an electrically operable locking drive (30, 121a),
- a connecting element (6, 6', 121), separably connectable to the interface (4, 4', 114), for connection of the electric arrangement with the on-board power supply system (13, 101), and
- a second locking means (11, 22) arranged at the connecting element (6, 6', 121), formed for engagement with the first locking means (9, 19), wherein
- the locking drive (30, 121a) is arranged at least at one of the locking means (9, 11, 19, 22) to move at least one of the locking means (9, 11, 19, 22) between a free position and a locking position,
- in the free position, the connecting element (6, 6', 121) is separable from the interface (4, 4', 114), and in the locking position, the connecting element (6, 6', 121) is mechanically locked with the interface (4, 4', 114),
- the module control (14, 125) is further configured to send an identification signal to the control device (107) upon connection of the connecting element (6, 6', 121) to the interface (4, 4', 114), and
- the control device (107) is configured to receive the identification signal, to compare the identification signal with at least one compatibility parameter, and in case that the identification signal corresponds to the compatibility parameter, to send an activation signal to the at least one locking drive (30, 121a) to lock the connecting element (6, 6', 121) to the interface (4, 4', 114).

2. Modular vehicle system according to claim 1, wherein the second locking means (11, 22) is movable between the free position and the locking position.

3. Modular vehicle system according to one of the preceding claims, wherein the locking drive (30, 121a) is arranged at the at least one connecting element (6, 6', 121).

4. Modular vehicle system according to claim 1, wherein the control device (107) is further configured to send a deactivation signal to the at least one locking drive (30, 121a) and to unlock the connecting element (6, 6', 121) and the interface (4, 4', 114).

5. Modular vehicle system according to one of the preceding claims, wherein the interface (4, 4', 114) and/or the connecting element (6, 6', 121) is formed as plug-in connector.

6. Modular vehicle system according to one of the preceding claims, wherein a flexible connection means (18) is arranged between the interface (4, 4', 114) and the electric vehicle (2, 2') and/or between the connecting element (6, 6', 121) and the module.

7. Modular vehicle system according to one of the preceding claims, wherein the first or the second locking means (9, 11) is formed as locking bolt (22).

8. Modular vehicle system according to claim 7, wherein the second or first locking means (9,11) is formed as receptacle (19) for the locking bolt (22).

9. Modular vehicle system according to one of the preceding claims, wherein a magnetic fixing is provided to fix in place and/or position the interface (4, 4', 114) and the connecting element (6, 6', 121) with each other.

10. Electric vehicle, particularly light electric vehicle, with at least
- an on-board power supply system (13, 101) for power supply of an electric drive unit (104),
- a control device (107), configured for communication with a module control (14, 125) of a module (3, 17, 120),
- an interface (4, 4', 114) connected to the on-board power supply system (13, 101) for connection to a connecting element (6, 6', 121) of the module (3, 17, 120), and
- a first locking means (9, 19) arranged at the interface (4, 4', 114), formed for engagement with a second locking means (11, 22) arranged at the connecting element (6, 6', 121), wherein
- an electrically operable locking drive (30, 121a) is arranged at the first locking means (9, 19) to move the first locking means (9, 19) between a free position and a locking position,
- the connecting element (6, 6', 121) is separable from the interface (4, 4', 114) in the free position, and the connecting element (6, 6', 121) is mechanically locked with the interface (4, 4', 114) in the locking position and
- the control device (107) is configured to receive an identification signal from the module control (14, 125), to compare the identification signal with at least one compatibility parameter, and in case that the identification signal corresponds to the compatibility parameter, to send an activation signal to the at least one locking drive (30, 121a) to lock the connecting element (6, 6', 121) to the interface (4, 4', 114).

11. Module for connection to an electric vehicle (2, 2'), particularly a light electric vehicle, with at least
- an electric arrangement for connection to an on-board power supply system (13, 101) of the electric vehicle (2, 2'),
- a module control (14, 125), which is configured to communicate with the control device (107) of the electric vehicle (2, 2') and which is connected to an electrically operable locking drive (30, 121a),
- a connecting element (6, 6', 121), separably connectable to an interface (4, 4', 114) of the electric vehicle, and
- a second locking means (11, 22) arranged at the connecting element (6, 6', 121), formed for engagement with a first locking means (9, 19) arranged at the interface (4, 4', 114), wherein
- the locking drive (30, 121a) is arranged at the second locking means (11, 22) to move the locking means (11, 22) between a free position and a locking position, wherein
- the connecting element (6, 6', 121) is separable from the interface (4, 4', 114) in the free position, and the connecting element (6, 6', 121) is mechanically locked with the interface (4, 4', 114) in the locking position and
- the module control (14, 125) is further configured to send an identification signal to the control device (107) upon connection of the connecting element (6, 6', 121) to the interface (4, 4', 114).

12. Method for connecting an electric vehicle (2, 2'), particularly a light electric vehicle, to a module (3, 17, 120), wherein the electric vehicle (2, 2') comprises at least an on-board power supply system (13, 101), a control device (107), an interface (4, 4', 114) connected to the on-board power supply system (13, 101) and a first locking means (9, 19) arranged at the interface (4, 4', 114), and the module (3, 17, 120) comprises at least a module control (14, 125), a connecting element (6, 6', 121), separably connectable to the interface (4, 4', 114), and a second locking means (11, 22), arranged at the connecting element (6, 6', 121), which is formed for engagement with the first locking means (9, 19), wherein
- the module control (14, 125) sends an identification signal to the control device (107) upon connection of the connecting element (6, 6', 121) to the interface (4, 4', 114), and
- the control device (107) receives the identification signal, compares the identification signal with at least one compatibility parameter, and in case that the identification signal corresponds to the compatibility parameter, sends an activation signal to at least one locking drive (30, 121a),
- to set the first and/or second locking means (9, 11, 19, 22) from a free position into a locking position to lock the connecting element (6, 6', 121) at the interface (4, 4', 114).

## Revendications

1. Système de véhicule modulaire (1) comprenant :
- un véhicule électrique (2, 2'), en particulier un véhicule léger électrique, comprenant au moins
- un réseau électrique de bord (13, 101) pour l'alimentation en énergie d'une unité d'entraînement électrique (104),
- un dispositif de commande (107),
- une interface (4, 4', 114) reliée au réseau électrique de bord (13, 101), assurant la liaison à au moins un module (3, 17, 120) et
- un premier moyen de verrouillage (9, 19) disposé sur l'interface (4, 4', 114), et
- un module (3, 17, 120), comprenant :
- un assemblage électrique,
- un moyen de commande de module (14, 125) conçue pour communiquer avec le dispositif de commande (107) et relié à un entraînement de verrouillage (30, 121a) actionnable électriquement,
- un élément de raccordement (6, 6', 121) apte à être relié de façon détachable à l'interface (4, 4', 114), destiné à relier l'assemblage électrique au réseau électrique de bord (13, 101), et
- un deuxième moyen de verrouillage (11, 22) disposé sur l'élément de raccordement (6, 6', 121), lequel est conçu pour venir en prise avec le premier moyen de verrouillage (9, 19), dans lequel
l'entraînement de verrouillage (30, 121a) est disposé sur au moins l'un des moyens de verrouillage (9, 11, 19, 22), pour déplacer au moins l'un des moyens de verrouillage (9, 11, 19, 22) entre une position libre et une position de verrouillage,
l'élément de raccordement (6, 6', 121) peut être détaché de l'interface (4, 4', 114) dans la position libre et l'élément de raccordement (6, 6', 121) est verrouillé mécaniquement avec l'interface (4, 4', 114) dans la position de verrouillage,
le moyen de commande de module (14, 125) est en outre conçu pour envoyer un signal d'identification vers le dispositif de commande (107) lors du raccordement de l'élément de raccordement (6, 6', 121) à l'interface (4, 4', 114), et
le dispositif de commande (107) est conçu pour recevoir le signal d'identification, pour comparer celui-ci avec au moins un paramètre de compatibilité et, dans le cas où le signal d'identification concorde avec le paramètre de compatibilité, pour envoyer un signal d'activation à l'au moins un entraînement de verrouillage (30, 121a), afin de verrouiller l'élément de raccordement (6, 6', 121) avec l'interface (4, 4', 114).

2. Système de véhicule modulaire selon la revendication 1, dans lequel le deuxième moyen de verrouillage (11, 22) peut être déplacé entre la position libre et la position de verrouillage.

3. Système de véhicule modulaire selon l'une des revendications précédentes, dans lequel l'entraînement de verrouillage (30, 121 a) est disposé sur l'au moins un élément de raccordement (6, 6', 121).

4. Système de véhicule modulaire selon la revendication 1, dans lequel le dispositif de commande (107) est en outre conçu pour envoyer un signal de désactivation à l'au moins un entraînement de verrouillage (30, 121 a) et pour déverrouiller l'élément de raccordement (6, 6', 121) et l'interface (4, 4', 114).

5. Système de véhicule modulaire selon l'une des revendications précédentes, dans lequel l'interface (4, 4', 114) et/ou l'élément de raccordement (6, 6', 121) est conçu comme un connecteur.

6. Système de véhicule modulaire selon l'une des revendications précédentes, dans lequel un moyen d'assemblage souple (18) est disposé entre l'interface (4, 4', 114) et le véhicule électrique (2, 2') et/ou entre l'élément de raccordement (6, 6', 121) et le module.

7. Système de véhicule modulaire selon l'une des revendications précédentes, dans lequel le premier ou le deuxième moyen de verrouillage (9, 11) est conçu comme un boulon de verrouillage (22).

8. Système de véhicule modulaire selon la revendication 7, dans lequel le deuxième ou le premier moyen de verrouillage (9, 11) est conçu comme une admission (19) pour le boulon de verrouillage (22).

9. Système de véhicule modulaire selon l'une des revendications précédentes, dans lequel il est prévu une fixation magnétique pour fixer et/ou positionner l'interface (4, 4', 114) et l'élément de raccordement (6, 6', 121) entre eux.

10. Véhicule électrique, en particulier un véhicule léger électrique, comprenant au moins :
- un réseau électrique de bord (13, 101) pour l'alimentation d'une unité d'entraînement électrique (104),
- un dispositif de commande (107) destiné à communiquer avec un moyen de commande de module (14, 125) d'un module (3, 17, 120),
- une interface (4, 4', 114) reliée au réseau électrique de bord (13, 101), pour la liaison avec un élément de raccordement (6, 6', 121) du module (3, 17, 120), et
- un premier moyen de verrouillage (9, 19) disposé sur l'interface (4, 4', 114), lequel est conçu pour venir en prise avec un deuxième moyen de verrouillage (11, 22) disposé sur l'élément de raccordement (6, 6', 121), dans lequel
- un entraînement de verrouillage (30, 121a) actionnable électriquement est disposé sur le premier moyen de verrouillage (9, 19), pour déplacer celui-ci entre une position libre et une position de verrouillage,
- l'élément de raccordement (6, 6', 121) peut être détaché de l'interface (4, 4', 114) dans la position libre et l'élément de raccordement (6, 6', 121) est verrouillé mécaniquement avec l'interface (4, 4', 114) dans la position de verrouillage, et
- le dispositif de commande (107) est conçu pour recevoir un signal d'identification provenant du moyen de commande de module (14, 125), pour comparer celui-ci avec au moins un paramètre de compatibilité, et dans le cas où le signal d'identification concorde avec le paramètre de compatibilité, pour envoyer un signal d'activation à l'au moins un entraînement de verrouillage (30, 121 a), afin de verrouiller l'élément de raccordement (6, 6', 121) avec l'interface (4, 4', 114).

11. Module de raccordement à un véhicule électrique (2, 2'), en particulier un véhicule léger électrique, comprenant au moins :
- un assemblage électrique pour le raccordement à un réseau électrique de bord (13, 101) du véhicule électrique (2, 2'),
- un moyen de commande de module (14, 125) conçu pour communiquer avec un dispositif de commande (107) du véhicule électrique (2, 2') et relié à un entraînement de verrouillage (30, 121 a) actionnable électriquement,
- un élément de raccordement (6, 6', 121) apte à être relié de façon détachable à une interface (4, 4', 114) du véhicule électrique, et
- un deuxième moyen de verrouillage (11, 22) disposé sur l'élément de raccordement (6, 6', 121), lequel est conçu pour venir en prise avec un premier moyen de verrouillage (9, 19) disposé sur l'interface (4, 4', 114), dans lequel
- l'entraînement de verrouillage (30, 121a) est disposé sur le deuxième moyen de verrouillage (11, 22) pour déplacer celui-ci entre une position libre et une position de verrouillage, dans lequel
l'élément de raccordement (6, 6', 121) peut être détaché de l'interface (4, 4', 114) dans la position libre et l'élément de raccordement (6, 6', 121) est verrouillé mécaniquement avec l'interface (4, 4', 114) dans la position de verrouillage, et
le moyen de commande de module (14, 125) est en outre conçu pour envoyer un signal d'identification vers le dispositif de commande (107) lors du raccordement de l'élément de raccordement (6, 6', 121) à l'interface (4, 4', 114).

12. Procédé pour le raccordement d'un véhicule électrique (2, 2'), en particulier d'un véhicule léger électrique comprenant un module (3, 17, 120), dans lequel le véhicule électrique (2, 2') comporte au moins un réseau électrique de bord (13, 101), un dispositif de commande (107), une interface (4, 4', 114) reliée au réseau électrique de bord (13, 101), et un premier moyen de verrouillage (9, 19) disposé sur l'interface (4, 4', 114), et dans lequel le module (3, 17, 120) comporte au moins un moyen de commande de module (14, 125), un élément de raccordement (6, 6', 121) apte à être relié de façon détachable à l'interface (4, 4', 114), et un deuxième moyen de verrouillage (11, 22) disposé sur l'élément de raccordement (6, 6', 121), lequel est conçu pour venir en prise avec le premier moyen de verrouillage (9, 19), dans lequel
- le moyen de commande de module (14, 125) envoie un signal d'identification au dispositif de commande (107) lors du raccordement de l'élément de raccordement (6, 6', 121) à l'interface (4, 4', 114), et
- le dispositif de commande (107) reçoit le signal d'identification, compare celui-ci avec au moins un paramètre de compatibilité et, dans le cas où le signal d'identification concorde avec le paramètre de compatibilité, envoie un signal d'activation à au moins un entraînement de verrouillage (30, 121a), pour
- déplacer le premier et/ou le deuxième moyen de verrouillage (9, 11, 19, 22) d'une position libre vers une position de verrouillage, et pour verrouiller l'élément de raccordement (6, 6', 121) sur l'interface (4, 4', 114).
